# EUROPÄISCHE PATENTSCHRIFT

(11) **EP 3 136 636 B1**
(45) Veröffentlichungstag und Bekanntmachung des Hinweises auf die Patenterteilung: **22.04.2020**
(21) Anmeldenummer: 15182405.9
(22) Anmeldetag: 25.08.2015
(51) Int. Cl.: H04K 3/00, G08G 1/017

(54) **VERFAHREN UND SYSTEM ZUM BILDLICHEN ERFASSEN EINES KRAFTFAHRZEUGS**
METHOD AND SYSTEM FOR CAPTURING AN IMAGE OF A MOTOR VEHICLE
PROCEDE ET SYSTEME D'ACQUISITION DE L'IMAGE D'UN VEHICULE AUTOMOBILE

(43) Veröffentlichungstag der Anmeldung: 01.03.2017
(73) Patentinhaber: Toll Collect GmbH, 10785 Berlin (DE)
(72) Erfinder: BUCHHEIM, Timm, 15366 Neuenhagen (DE); KÖNIG, Tilmar, 15711 Königs Wusterhausen (DE)
(74) Vertreter: adares Patent- und Rechtsanwälte Reininger & Partner GmbB

(56) Entgegenhaltungen:
- EP-B1- 1 446 678
- EP-B1- 2 535 737
- DE-A1-102009 013 841
- GB-A- 2 521 246
- US-A- 5 809 161

## Beschreibung

Die Erfindung betrifft ein Verfahren und ein System zum bildlichen Erfassen eines Kraftfahrzeugs, das eine Störquelle mit sich führt, welche geeignet ist, die bestimmungsgemäße Funktion eines Funksignalempfängers, insbesondere einer mit einem GNSS-Empfänger (GNSS steht für Globales Navigationssatelliten-System) ausgerüsteten Positionsbestimmungseinrichtung, zu beeinträchtigen.

Eine auf GNSS basierte Positionsbestimmungseinrichtung ermittelt aus von mehreren Satelliten ausgesendeten GNSS-Signalen ihre Position mittels des GNSS-Empfängers. Wenn der GNSS-Empfänger in ein Kraftfahrzeug eingebaut ist, kann er dazu dienen, Positionsdaten entlang einer von dem Kraftfahrzeug befahrenen Straße zu erhalten. Anhand der Positionsdaten kann beispielsweise die Fahrt auf einer mautpflichtigen Straße erkannt, eine fällige Straßenbenutzungsgebühr errechnet und dem Fahrer oder Halter des Kraftfahrzeugs automatisch in Rechnung gestellt werden. GNSS-Empfänger kommen auch in Navigationssystemen zum Einsatz.

Wenn das Kraftfahrzeug eine Störquelle mit sich führt, kann dieser Prozess der Gebührenerhebung negativ beeinflusst werden. Eine Störquelle kann insbesondere ein Störsignal aussenden, mit dem der Empfang von Signalen von Satelliten eines GNSS wie beispielsweise GPS (Globales Positionsbestimmungssystem) gestört werden soll. Ein Störsignal, beispielsweise in Form eines Rauschens oder in Form einzelner oder mehrerer frequenzvariabler oder frequenzinvariabler Träger auf einem oder mehreren Betriebsbändern, z.B. auf dem Betriebsband L1 beim GPS, wird als Jamming-Signal bezeichnet. Ein Störsignal in Form eines Täuschungssignals, das den Signalen mehrerer Satelliten entspricht, jedoch eine falsche Information trägt, die in einem GNSS-Empfänger zur Bestimmung einer anderen Position als der wahren Position führt, wird als Spoofing-Signal bezeichnet.

Wird in einem Kraftfahrzeug eine solche Störquelle eingesetzt, welche die Positionsermittlung des GNSS-Empfängers verfälscht oder gänzlich verhindert, dann kann eine Mautgebühr nicht korrekt errechnet werden. Es ist daher notwendig, ein Kraftfahrzeug, welches eine derartige Störquelle mit sich führt, zu identifizieren. Daraufhin kann der Kraftfahrzeughalter verwarnt oder mit einem Bußgeld belegt werden.

Eine Störquelle, die in einem Frequenzbereich stört, der für die Mobilfunkkommunikation verwendet wird, kann die Übertragung von gebührenrelevanten Daten (beispielsweise von Positionsdaten oder der fahrzeugseitig bestimmten Straßenbenutzungsgebühr selbst) von einer fahrzeugseitigen Einrichtung (on-board unit oder OBU) an die Zentrale unterbinden, wodurch ebenfalls ein Prozess der Mauterhebung gestört werden kann, wenn er Mobilfunkkommunikation umfasst.

EP 2 535 737 B1 beschreibt ein Verfahren, bei dem die Position der Störquelle durch das Passieren des die Störquelle mitführenden Kraftfahrzeugs an einem Verkehrswegepunkt mittels eines Störungsdetektors ermittelt wird. Dabei soll eine Bildaufnahme des die Störquelle mitführenden Kraftfahrzeugs gemacht werden, um das Kraftfahrzeug zu identifizieren.

Fraglich bleibt aber, wie die Störungsdetektion mit dem aufgenommenen Kraftfahrzeug in Verbindung zu bringen ist, insbesondere, wie der Zeitpunkt der Störungsdetektion mit dem Zeitpunkt der Bildaufnahme zu korrelieren ist, damit auch tatsächlich das die Störquelle mitführende Kraftfahrzeug identifiziert wird, und nicht ein unbeteiligtes, also nicht die Störquelle mitführendes Kraftfahrzeug. Dies ist in der Tat problematisch, weil der Moment des geringsten Abstandes von der Störquelle zum Störungsdetektor prinzipiell unbekannt ist: Die Stärke des an dem Störungsdetektor empfangenen Störsignals d.h. Empfangssignals nimmt zu, solange sich das Kraftfahrzeug nähert, und nimmt erst dann wieder ab, wenn sich das Kraftfahrahrzeug von dem Störungsdetektor entfernt. Da die Intensität des Störungssignals jedoch generell unbekannt ist, kann kein Schwellwert der Stärke des Empfangssignals definiert werden, der maßgeblich für einen bestimmten Ort der Störquelle ist.

Weiterhin offenbart GB 2521246A eine luftgestützte Signalpeilvorrichtung, die ausgebildet ist, die Position eines Störsenders dadurch zu bestimmen, dass sie von verschiedenen Orten das Störsignal erfasst. Dazu wird ein Detektor an einem ersten Ort verwendet, um eine Messung einer oder mehrerer Charakteristiken eines Jamming-Signals durchzuführen. Dann wird der Detektor zu einem zweiten Ort bewegt, um dort eine Messung einer oder mehrerer Charakteristiken eines Jamming-Signals durchzuführen. Dann wird ein dritter Ort ausgewählt, damit der Detektor dort eine Messung einer oder mehrerer Charakteristiken eines Jamming-Signals durchführen kann, wobei der dritte Ort von einer Geraden beabstandet ist, die durch den ersten und zweiten Ort läuft. Der Detektor wird zu dem dritten Ort bewegt, um eine Messung einer oder mehrerer Charakteristiken eines Jamming-Signals durchzuführen. Die vom Detektor durchgeführten Messungen werden verwendet, um die Quelle des Jamming-Signals zu lokalisieren. Zum Bestätigen des lokalisieren Orts der Quelle des Jamming-Signals kann weiterhin ein zweiter Detektor verwendet werden, der Charakteristika der Quelle des Jamming-Signals misst und beispielsweise eine Kamera enthält.

Es ist daher Aufgabe der Erfindung, ein Verfahren und ein System zum bildlichen Erfassen eines Kraftfahrzeugs bereitzustellen, die eine Zuordnung einer Bildaufnahme eines Kraftfahrzeugs zu dem Kraftfahrzeug ermöglichen, das eine Störquelle mit sich führt, die geeignet ist, die bestimmungsgemäße Funktion eines Funksignalempfängers, insbesondere einer mit einem GNSS-Empfänger ausgerüsteten Positionsbestimmungseinrichtung, zu beeinträchtigen.

Diese Aufgabe wird durch ein Verfahren und ein System gemäß den unabhängigen Ansprüchen gelöst. Vorteilhafte Weiterbildungen sind Gegenstand der abhängigen Ansprüche.

Mittels des Verfahrens und des Systems kann der Ort der im Kraftfahrzeug mitgeführten und daher bewegten Störquelle wenigstens einmal derart genau bestimmt werden, dass zumindest die Identifikation einer Bildaufnahme des die Störquelle mitführenden Kraftfahrzeugs möglich wird. Dies kann zum Beispiel der Ort einer Signalerfassungsvorrichtung in dem Moment sein, in dem die bewegte Störquelle den geringsten Abstand zu der Signalerfassungsvorrichtung aufweist.

Die Erfindung betrifft ein Verfahren zum bildlichen Erfassen eines Kraftfahrzeugs, das eine Störquelle mit sich führt, die geeignet ist, die bestimmungsgemäße Funktion eines Funksignalempfängers zu beeinträchtigen, mittels wenigstens einer Signalerfassungsvorrichtung und wenigstens einer Bildaufnahmevorrichtung. Das Verfahren umfasst die folgenden Schritte: Erfassen wenigstens eines Störsignals der Störquelle und Aufnehmen wenigstens eines Zeitverlaufs einer Empfangssignalstärke des Störsignals mittels der Signalerfassungsvorrichtung; Bestimmen, anhand des aufgenommenen Zeitverlaufs der Empfangssignalstärke, wenigstens eines Optimalzeitpunktes oder wenigstens eines Optimalzeitbereiches, an dem das Kraftfahrzeug, das die Störquelle mit sich führt, in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme der Bildaufnahmevorrichtung von dem Kraftfahrzeug ermöglicht, mittels einer Empfangssignalstärkezeitverlauf-Verarbeitungseinrichtung; und Erzeugen einer Bildaufnahme von dem Kraftfahrzeug oder von einem Kraftfahrzeugbereich des Kraftfahrzeugs zu dem Optimalzeitpunkt oder innerhalb des Optimalzeitbereiches mittels der Bildaufnahmevorrichtung.

Bei der Empfangssignalstärkezeitverlauf-Verarbeitungseinrichtung kann es sich um die in die Signalerfassungsvorrichtung integrierte Datenverarbeitungseinrichtung handeln, insbesondere um einen Prozessor der Signalerfassungsvorrichtung. Alternativ kann die Empfangssignalstärkezeitverlauf-Verarbeitungseinrichtung von der Signalerfassungsvorrichtung getrennt angeordnet sein und beispielsweise Teil eines Servers sein, an den die Signalerfassungsvorrichtung den ermittelten Zeitverlauf der Empfangssignalstärke sendet. Die Empfangssignalstärkezeitverlauf-Verarbeitungseinrichtung weist vorzugsweise einen Mikroprozessor und einen Speicher auf.

Vorzugsweise wird ein Optimalzeitpunkt oder Optimalzeitbereich bestimmt und es wird eine frontseitige oder rückseitige Bildaufnahme des Kraftfahrzeugs erzeugt oder aus einer Reihe von Bildaufnahmen ausgewählt. Alternativ bevorzugt werden zwei Optimalzeitpunkte oder Optimalzeitbereiche bestimmt, ein erster für eine frontseitige Bildaufnahme des Kraftfahrzeugs und ein zweiter für eine rückseitige Bildaufnahme des Kraftfahrzeugs.

Die Erfindung sieht vor, den zeitlichen Verlauf einer von einer straßenseitig angeordneten Signalerfassungsvorrichtung detektierten Stärke des Störsignals der von einem Kraftfahrzeug mitgeführten Störquelle aufzuzeichnen. Diese Aufzeichnung geschieht vorzugsweise während einer Annäherung des Kraftfahrzeugs an die straßenseitig angeordnete Signalerfassungsvorrichtung, während der Passage des Kraftfahrzeugs an der Signalerfassungsvorrichtung vorbei und während der Entfernung des Kraftfahrzeugs von der Signalerfassungsvorrichtung. Anschließend wird aus dem aufgenommenen Empfangssignalstärkeverlauf unter Bestimmung wenigstens eines relativen Empfangssignalstärkemaximums im aufgenommenen Empfangssignalstärkeverlauf mittels einer mit der Signalerfassungsvorrichtung und der Bildaufnahmeeinrichtung gekoppelten Empfangssignalstärkezeitverlauf-Verarbeitungseinrichtung der Moment bestimmt, in dem die Bildaufnahmeeinrichtung ein oder mehrere Bilder des Kraftfahrzeugs mit der Störquelle aufnimmt, oder der der Aufnahmezeit eines Bildes aus einer Serie von mehreren von der Bildaufnahmeeinrichtung aufgenommenen Bildern entspricht. Die Aufnahmezeit kann in der Vergangenheit liegen, wenn das Kraftfahrzeug bereits die Bildaufnahmeeinrichtung passiert hat, bevor es die Signalerfassungsvorrichtung passiert, oder in der Zukunft (voraussichtliche Ankunftszeit), wenn das Kraftfahrzeug die Signalerfassungsvorrichtung passiert hat, bevor es die Bildaufnahmeeinrichtung passiert.

Das Bestimmen des Optimalzeitpunktes oder des Optimalzeitbereiches mittels der Empfangssignalstärkezeitverlauf-Verarbeitungseinrichtung und das Erzeugen einer Bildaufnahme mittels der Bildaufnahmevorrichtung können in einer beliebigen Reihenfolge durchgeführt werden. D.h., in einer ersten Verfahrensvariante werden zuerst der Schritt des Bestimmens des Optimalzeitpunktes oder des Optimalzeitbereiches und dann der Schritt des Erzeugens der Bildaufnahme durchgeführt. In einer zweiten Verfahrensvariante kann alternativ zuerst der Schritt des Erzeugens der Bildaufnahme, insbesondere einer Reihe mehrerer Bildaufnahmen, und dann der Schritt des Bestimmens des Optimalzeitpunktes oder des Optimalzeitbereiches durchgeführt werden.

In der ersten Verfahrensvariante wird zuerst anhand wenigstens eines aufgenommenen Zeitverlaufs der Empfangssignalstärke die Ankunft des Kraftfahrzeugs an einer für die Bildaufnahmeeinrichtung vorbestimmten Aufnahmeposition zur Bildaufnahme des Kraftfahrzeugs bestimmt und dann die Bildaufnahmeeinrichtung zur Aufnahme eines oder mehrerer Bilder in Abhängigkeit von der ermittelten Ankunft bzw. des Optimalzeitpunktes ausgelöst, d.h. bei der voraussichtlichen Ankunftszeit. In der zweiten Verfahrensvariante wird mindestens eine Bildaufnahme von dem Kraftfahrzeug oder von einem Kraftfahrzeugbereich des Kraftfahrzeugs zu dem Optimalzeitpunkt oder innerhalb des Optimalzeitbereiches erzeugt und dann der Optimalzeitpunkt oder der Optimalzeitbereich anhand des aufgenommenen Zeitverlaufs der Empfangssignalstärke aus einer Serie von mehreren Bildaufnahmen ein Bild mit einer Aufnahmezeit ausgewählt, die einer Ankunftszeit des Kraftfahrzeugs an der Aufnahmeposition zumindest näherungsweise entspricht.

Bei der Bildaufnahme kann es sich um ein einzelnes Foto, um eine Reihe von Fotos oder um ein Video, d.h. eine Bildsequenz, handeln. Beispielsweise handelt es sich bei der Bildaufnahme um ein Foto, wenn die Erzeugung der Bildaufnahme nach der Ermittlung des Optimalzeitpunktes erfolgt. D.h. wenn ein Optimalzeitpunkt ermittelt wird und anschließend die Bildaufnahme erzeugt wird, ist die Bildaufnahme beispielsweise ein Foto. Die Aufnahme einer Reihe von Fotos oder insbesondere eines Videos ist vorteilhaft, wenn die Erzeugung der Bildaufnahme vor der Bestimmung des Optimalzeitpunktes oder Optimalzeitbereiches durchgeführt wird.

Im Allgemeinen sind Kraftfahrzeuge anhand wenigstens eines Kraftfahrzeugkennzeichens identifizierbar, welches auf wenigstens ein am Kraftfahrzeug frontseitig und/ oder rückseitig befestigtes Kraftfahrzeugkennzeichenschild typischerweise aufgedruckt und/ oder aufgeprägt ist. Das Kraftfahrzeugkennzeichen umfasst maschinenlesbare Zeichen, die von einer Bildverarbeitungseinrichtung anhand eines Zeichenerkennungsverfahrens aus den Daten des Bildes, welches von der Bildaufnahmevorrichtung von dem Kraftfahrzeugkennzeichenschild erzeugt wurde, bestimmt werden können. Zur Vereinfachung wird das Kraftfahrzeugkennzeichenschild auch als Kraftfahrzeugkennzeichen bezeichnet. Der Schritt Erzeugen einer Bildaufnahme von dem Kraftfahrzeug oder von einem Kraftfahrzeugbereich des Kraftfahrzeugs umfasst insbesondere eine frontseitige und/oder rückseitige Bildaufnahme des Kraftfahrzeugs oder eines Kraftfahrzeugbereichs. Im Falle einer frontseitigen Bildaufnahme des Kraftfahrzeugs oder Kraftfahrzeugbereichs wird die Bildaufnahme bevorzugt derart erzeugt, dass das Kraftfahrzeugkennzeichen und bevorzugter auch der Fahrer des Kraftfahrzeugs auf der Bildaufnahme erkennbar aufgenommen sind. Im Falle einer rückseitigen Bildaufnahme des Kraftfahrzeugs oder Kraftfahrzeugbereichs wird die Bildaufnahme vorzugsweise derart erzeugt, dass das Kraftfahrzeugkennzeichen auf der Bildaufnahme erkennbar aufgenommen ist.

In einer bevorzugten Ausführungsform wird zu dem Optimalzeitpunkt oder während des Optimalzeitbereiches ein Bildauslösesignal an die Bildaufnahmevorrichtung übertragen, und das Erzeugen der Bildaufnahme von dem Kraftfahrzeug oder von dem Kraftfahrzeugbereich des Kraftfahrzeugs zu dem Optimalzeitpunkt oder innerhalb des Optimalzeitbereiches in Folge des Empfangs des Bildauslösesignals in der Bildaufnahmevorrichtung ausgelöst. Das Bildauslösesignal wird vorzugsweise von der Signalerfassungsvorrichtung und/oder der in sie integrierten Empfangssignalstärkezeitverlauf-Verarbeitungseinrichtung übertragen, die den Optimalzeitpunkt oder Optimalzeitbereich ermittelt. Wenn die Signalerfassungsvorrichtung von der Bildaufnahmevorrichtung beabstandet angeordnet ist, weist sie beispielsweise eine Funkvorrichtung auf und weist die Bildaufnahmevorrichtung eine Bildaufnahmefunkvorrichtung bzw. Kamerafunkvorrichtung auf, die das Bildauslösesignal als Funksignal von der Funkvorrichtung empfangen kann. In dieser Verfahrensausgestaltung wird zuerst der Optimalzeitpunkt oder Optimalzeitbereich bestimmt und dann die Bildaufnahme des Kraftfahrzeugs oder des Kraftfahrzeugbereichs erzeugt. In einer anderen bevorzugten Ausführungsform wird der Optimalzeitpunkt oder der Optimalzeitbereich an die Bildaufnahmevorrichtung mitgeteilt, wobei die Bildaufnahmevorrichtung infolge dessen die Bildaufnahme von dem Kraftfahrzeug oder von dem Kraftfahrzeugbereich des Kraftfahrzeugs zu dem Optimalzeitpunkt oder innerhalb des Optimalzeitbereiches erzeugt. In dieser Verfahrensausgestaltung wird zuerst der Optimalzeitpunkt oder Optimalzeitbereich bestimmt und danach die Bildaufnahme des Kraftfahrzeugs oder des Kraftfahrzeugbereichs erzeugt. Dabei werden der Optimalzeitpunkt oder der Optimalzeitbereich an die Bildaufnahmevorrichtung beispielsweise von der Signalerfassungsvorrichtung und/oder der Empfangssignalstärkezeitverlauf-Verarbeitungseinrichtung mitgeteilt und die Bildaufnahmevorrichtung erzeugt infolge dessen die Bildaufnahme von dem Kraftfahrzeug oder von dem Kraftfahrzeugbereich zu dem Optimalzeitpunkt oder innerhalb des Optimalzeitbereiches. Die Mitteilung des Optimalzeitpunktes oder Optimalzeitbereiches kann zeitlich vor dem Erzeugen der Bildaufnahme erfolgen, d.h. die Mitteilung muss nicht sofort eine Bildaufnahme auslösen. Vielmehr kann der Bildaufnahmevorrichtung der Optimalzeitpunkt oder Optimalzeitbereich mitgeteilt werden, und zeitlich versetzt kann die Bildaufnahmevorrichtung ein Auslösesignal zur Erzeugung der Bildaufnahme selbst generieren, um zum Optimalzeitpunkt oder Optimalzeitbereich die Bildaufnahme zu erzeugen.

Die Übertragung des Bildauslösesignals oder des Optimalzeitpunktes für die Bildaufnahme kann im Funkwege zwischen der Funkvorrichtung der Signalerfassungsvorrichtung und der Bildaufnahmefunkvorrichtung der Bildaufnahmevorrichtung unidirektional (beispielsweise im Rundfunk-(Broadcast-) oder Unicast-Modus) erfolgen, wobei die Funkvorrichtung der Signalerfassungsvorrichtung nur einen Sender aufweist und die Bildaufnahmefunkvorrichtung nur einen Empfänger aufweist, oder bidirektional erfolgen, wobei sowohl die Peilerfunkvorrichtung als auch die Bildaufnahmefunkvorrichtung jeweils einen Sendeempfänger aufweisen, beispielsweise um sich gegenseitig vor der besagten Übertragung zu authentifizieren.

Die Kamerafunkvorrichtung kann auch von einer Kontrolleinrichtung umfasst sein, die mit der Bildaufnahmevorrichtung gekoppelt ist und steuert, wann die die Bildaufnahmevorrichtung Bildaufnahmen erzeugen soll.

Weiterhin kann alternativ bevorzugt sein, dass mittels der Bildaufnahmevorrichtung eine Reihe von mehreren Bildaufnahmen erzeugt wird, und die Empfangssignalstärkezeitverlauf-Verarbeitungseinrichtung oder eine weitere Verarbeitungseinrichtung, beispielsweise eine Bildverarbeitungseinrichtung, aus der Reihe von mehreren Bildaufnahmen wenigstens eine Bildaufnahme auswählt, die zu dem Optimalzeitpunkt oder innerhalb des Optimalzeitbereiches erzeugt wurde. Bei der Bildverarbeitungseinrichtung kann es sich um die vorstehende Empfangssignalstärkezeitverlauf-Verarbeitungseinrichtung handeln. Alternativ ist die Bildverarbeitungseinrichtung von der vorstehend genannten Empfangssignalstärkezeitverlauf-Verarbeitungseinrichtung verschieden; dann ist die Bildverarbeitungseinrichtung vorzugsweise mit der Signalerfassungsvorrichtung und der Bildaufnahmevorrichtung gekoppelt. Die Bildaufnahmevorrichtung kann unabhängig von der Signalerfassungsvorrichtung und Empfangssignalstärkezeitverlauf-Verarbeitungseinrichtung eine Bildaufnahme vorzugsweise in Form einer Videoaufnahme erzeugen, während die Signalerfassungsvorrichtung ausschließlich mit der Empfangssignalstärkezeitverlauf-Verarbeitungseinrichtung kommuniziert, die neben der Bestimmung des Optimalzeitpunktes oder Optimalzeitbereiches eine bereits erzeugte Bildaufnahme auswählt und bis zu einem Abrufen der Bildaufnahme bzw. Auslesen eines Speichers der Empfangssignalstärkezeitverlauf-Verarbeitungseinrichtung speichert und/ oder an einen Zentralrechner sendet.

Bildaufnahmevorrichtung, Signalerfassungsvorrichtung, Empfangssignalstärkezeitverlauf-Verarbeitungseinrichtung und/ oder Bildverarbeitungseinrichtung können auch von einer einzigen straßenseitigen Kontrolleinrichtung umfasst sein.

Vorzugsweise wird mittels einer Signalpeilvorrichtung das Störsignal der Störquelle erfasst, mindestens ein Peilwinkel der Störquelle ermittelt, anhand des ermitteln Peilwinkels ein Bildreihenaufnahme-Startzeitpunkt bestimmt, der bestimmte Bildreihenaufnahme-Startzeitpunkt an die Bildaufnahmevorrichtung übermittelt und die Bildaufnahmevorrichtung in Abhängigkeit von dem Bildreihenaufnahme-Startzeitpunkt ausgelöst, die Reihe mehrerer Bildaufnahmen zu erzeugen. Der Startzeitpunkt liegt vorzugsweise innerhalb des Optimalzeitbereiches oder am Beginn des Optimalzeitbereiches. Dazu überwacht die Signalpeilvorrichtung, die an einer Straße beliebig, beispielsweise an einer Brücke oder einem Autobahnkreuz angeordnet ist, eine bestimmte GNSS-Frequenz oder - Frequenzbereich, insbesondere eine GPS-Frequenz. Wenn ein Störsignal auf dieser Frequenz erfasst wird, dessen Leistung über der Satellitenleistung liegt, beispielsweise 3 Dezibel (dB) über der Leistung des Satellitensignals am Empfangsort, wird von der Signalpeilvorrichtung erkannt, dass eine Störquelle in ihrem Detektionsbereich ist. In der Signalpeilvorrichtung ist hierzu beispielsweise ein Schwellenwert für die Erfassung eines Störsignals hinterlegt.

Nach Erfassen des Störsignals von der Signalpeilvorrichtung und Ermitteln des Peilwinkels und Bestimmen des Bildreihenaufnahme-Startzeitpunktes mittels einer in die Signalpeilvorrichtung integrierten oder gekoppelten Peilwinkel-Verarbeitungseinrichtung, insbesondere eines Prozessors der Signalpeilvorrichtung, wird die Bildaufnahmevorrichtung in Abhängigkeit von dem Bildreihenaufnahme-Startzeitpunkt ausgelöst. Ein Bildaufnahme-Endzeitpunkt, an dem die Bildaufnahme beendet wird, kann mittels des aufgenommenen Zeitverlaufs des Empfangssignals der Störquelle bestimmt werden. Anhand des aufgenommenen Zeitverlaufs der Empfangssignalstärke kann der Optimalzeitpunkt oder Optimalzeitbereich, an dem das Kraftfahrzeug, das die Störquelle mit sich führt, in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme der Bildaufnahmevorrichtung von dem Kraftfahrzeug ermöglicht, mittels der der Signalerfassungsvorrichtung zugeordneten Empfangssignalstärkezeitverlauf-Verarbeitungseinrichtung bestimmt werden. Wenn der Optimalzeitpunkt oder Optimalzeitbereich bestimmt ist oder wenn die Signalerfassungsvorrichtung kein Störsignal empfängt, wird die Bildaufnahme beendet. Der ermittelte Peilwinkel kann weiterhin bei der Bestimmung des Optimalzeitpunktes oder des Optimalzeitbereiches berücksichtigt werden.

Bevorzugterweise ist die Signalerfassungsvorrichtung Teil der Signalpeilvorrichtung oder ist die Signalpeilvorrichtung Teil der Signalerfassungsvorrichtung. Wenn beispielsweise die Signalpeilvorrichtung eine oder mehrere Antennen umfasst, kann eine der Antennen dazu verwendet werden, das Störsignal zu erfassen und den Zeitverlauf der Empfangssignalstärke des Störsignals aufzunehmen.

Die ausgewählte Bildaufnahme wird vorzugsweise zur Identifizierung des Kraftfahrzeugs einer optischen Zeichenerkennung (OCR) einer Bildverarbeitungseinrichtung unterworfen. Das Kennzeichen des die Störquelle mitführenden Kraftfahrzeugs wird mittels der Bildverarbeitungseinrichtung ausgelesen und kann identifiziert werden. Das identifizierte Kennzeichen kann von der Empfangssignalstärkezeitverlauf-Verarbeitungseinrichtung an einen Server übersendet werden, damit der Halter ermittelt wird.

Vorzugsweise ermittelt die Empfangssignalstärkezeitverlauf-Verarbeitungseinrichtung im aufgenommenen Zeitverlauf der Empfangssignalstärke wenigstens einen Maximalwert der Empfangssignalstärke und bestimmt anhand des ermittelten Maximalwertes den Optimalzeitpunkt oder den Optimalzeitbereich. Für den Fall, dass die Störsignalintensität unabhängig von der Entfernung zur Signalerfassungsvorrichtung auf einer Zeitskala, die wenigstens eine ganze Größenordnung kleiner ist als die der Halbwertsbreite eines einfachen Empfangssignalstärkeverlaufes, um mehr als einen bestimmten Prozentsatz des Empfangssignalstärkeverlaufsmaximums schwankt, beispielsweise um mehr als 10%, kann der Empfangssignalstärkeverlauf auch als zeitlicher Mittelwert des Empfangssignals, der jeweils über eine halbe bis ganze Größenordnung unterhalb der Halbwertsbreite gebildet wird (beispielsweise als Mittel- oder Medianwert), erfasst und/ oder registriert werden, oder als Einhüllende von über eine halbe bis ganze Größenordnung unterhalb der Halbwertsbreite im Empfangssignal aufeinander folgender Maxima.

Vorzugsweise wird der Optimalzeitpunkt oder der Optimalzeitbereich mittels der Empfangssignalstärkezeitverlauf-Verarbeitungseinrichtung als der Zeitpunkt oder Zeitbereich bestimmt, an dem oder während dessen die Empfangssignalstärke einen vorbestimmten relativen Schwellwert in Bezug auf den Maximalwert unterschreitet oder überschreitet oder innerhalb eines vorbestimmten relativen Wertebereiches in Bezug auf den Maximalwert liegt.

Alternativ bevorzugt wird mittels der Empfangssignalstärkezeitverlauf-Verarbeitungseinrichtung aus dem aufgenommenen Zeitverlauf und dem ermittelten Maximalwert der Empfangssignalstärke ein Maximalwert-Zeitpunkt und/ oder wenigstens eine Zeitverlaufsbreite ermittelt und der Optimalzeitpunkt oder der Optimalzeitbereich mittels einer Extrapolation oder Interpolation aus dem Maximalwert-Zeitpunkt und/ oder der Zeitverlaufsbreite bestimmt. Bei der Zeitverlaufsbreite handelt es sich um die Zeitabschnittsdauer. Die Zeitverlaufsbreite ist vorzugsweise die Halbwertsbreite des Zeitverlaufes, welche auch als FWHM (Full Width at Half Maximum) bezeichnet wird.

Vorzugsweise wird mittels der Empfangssignalstärkezeitverlauf-Verarbeitungseinrichtung ein Straßenverlauf einer Straße, auf dem sich das Kraftfahrzeug bewegt, in die Extrapolation oder die Interpolation einbezogen. Der Straßenverlauf kann in der Empfangssignalstärkezeitverlauf-Verarbeitungseinrichtung in einem Speicher hinterlegt sein. Anhand des Zeitverlaufs der Empfangssignalstärke kann in der Regel lediglich eine Positionskurve ermittelt werden, an der sich das Kraftfahrzeug mit der Störquelle zum Zeitpunkt des Signalempfangs befinden könnte. Um die tatsächliche Position zu ermitteln, muss der Straßenverlauf mit einbezogen werden, indem ein oder mehrere Schnittpunkte zwischen dem hinterlegten Straßenverlauf und der Positionskurve errechnet werden. Bei der Extrapolation oder der Interpolation kann also der hinterlegte Straßenverlauf einbezogen werden, indem zur Bestimmung einer Position des Kraftfahrzeugs zu einem bestimmten Zeitpunkt ein oder mehrere Schnittpunkte zwischen einer ermittelten Positionskurve und dem hinterlegten Straßenverlauf errechnet werden. Die so bestimmte Position kann dann in Form von Ortskoordinaten in die Extrapolation oder Interpolation einbezogen werden.

Typischerweise weist die Signalerfassungsvorrichtung zum Erfassung des Störsignals der Störquelle wenigstens eine Empfangsantenne - insbesondere eine Richtantenne - auf, die der Signalerfassungsvorrichtung das Störsignal, das sie empfangen hat, bereitstellt.

In einer bevorzugten Ausführungsform werden durch mehrere räumlich von einander beabstandete Empfangsantennen der Signalerfassungsvorrichtung im Wesentlichen zeitgleich jeweils ein Störsignal derselben Störquelle empfangen und mehrere den jeweiligen Empfangsantennen zugeordnete Zeitverläufe von Empfangssignalstärken der Störsignale mittels der Signalerfassungsvorrichtung aufgenommen. Hierbei wird von mehreren Bildaufnahmevorrichtungen einer Kontrolleinrichtung jene Bildaufnahmevorrichtung zum Erzeugen der Bildaufnahme oder zum Bereitstellen der erzeugten Bildaufnahme durch die Kontrolleinrichtung ausgewählt, die mit derjenigen Empfangsantenne assoziiert ist, die gegenüber allen anderen Empfangsantennen, die Störsignale empfangen und der Signalerfassungsvorrichtung bereitstellen, der Signalerfassungsvorrichtung das Störsignal mit der höchsten Empfangssignalstärke bereitgestellt hat.

Diese Verfahrensausgestaltung eignet sich vorzugsweise für eine Straße mit mehreren Richtungs-Fahrstreifen und/oder einem Standstreifen, auf der für jeden Stand- und/ oder Fahrstreifen eine eigene Bildaufnahmevorrichtung, beispielsweise an einer Brücke, die die Straße überspannt, vorgesehen ist. Hier muss nicht nur die Position des Kraftfahrzeugs mit der Störquelle zu einem Optimalzeitpunkt oder Optimalzeitbereich bestimmt werden, sondern auch der Fahrstreifen, auf dem sich das Kraftfahrzeug zu dem Optimalzeitpunkt oder Optimalzeitbereich befindet. Die von der Kontrolleinrichtung ausgewählte Bildaufnahmevorrichtung kann zum Erzeugen der Bildaufnahme ausgelegt sein, wenn die Bildaufnahme nach dem Bestimmen des Optimalzeitpunktes oder Optimalzeitbereiches erfolgt, oder zum Bereitstellen einer bereits erzeugten Bildaufnahme ausgelegt sein, wenn die Bildaufnahme vor dem Bestimmen des Optimalzeitpunktes oder Optimalzeitbereiches erfolgt ist, und von der Kontrolleinrichtung entsprechend gesteuert werden.

Vorzugsweise wird die zu dem Optimalzeitpunkt oder innerhalb des Optimalzeitbereiches erzeugte Bildaufnahme und/ oder ein aus der Bildaufnahme gewonnenes zur Identifikation des Kraftfahrzeugs taugliches Kraftfahrzeugkennzeichen zusammen mit einer Information über den Ort der Störsignalerfassung an einen Zentralrechner übertragen. Der Zentralrechner kann den Halter des Kraftfahrzeugs ermitteln und ihm ggf. eine erhöhte Maut in Rechnung stellen oder eine Verwarnung zusenden.

Der aufgenommene Zeitverlauf der Empfangssignalstärke ist bei graphischer Darstellung üblicherweise symmetrisch und weist insbesondere eine Normal- bzw. Gaußverteilung auf. Dies ist aber unter bestimmten Umständen nicht der Fall. Wird die Störquelle einseitig abgeschirmt, dann kann das empfangene Signal im zeitlichen Verlauf eine Asymmetrie aufweisen. Die Abschirmung kann absichtlich vorgenommen worden sein, oder sie kann sich aus den baulichen Gegebenheiten des Kraftfahrzeugs ergeben. Wenn die Störquelle beispielsweise in einem LKW angeordnet ist, dann wird das Störsignal nach hinten hin durch den Laderaum des LKW abgeschirmt. In einer bevorzugten Ausführungsform wird deshalb mittels der Empfangssignalstärkezeitverlauf-Verarbeitungseinrichtung eine Asymmetrie des aufgenommenen Zeitverlaufs der Empfangssignalstärke ermittelt und diese Asymmetrie bei der Bestimmung des Optimalzeitpunktes oder des Optimalzeitbereiches mit berücksichtigt. Die Art und Stärke Asymmetrie kann durch eine Schiefe beschrieben werden, die eine statistische Kennzahl ist. Die Schiefe zeigt an, ob und wie stark die Verteilung des aufgenommenen Zeitverlaufs nach rechts (positive Schiefe) oder nach links (negative Schiefe) geneigt ist. Ist der Empfangssignalstärkeverlauf deutlich rechtsschief, so ist davon auszugehen, dass das Kraftfahrzeug ein LKW ist. Soll die Bildaufnahme in Fahrtrichtung erfolgen, um also das hintere Nummernschild des Kraftfahrzeugs zu erfassen, dann muss dem Optimalzeitpunkt oder dem Optimalzeitbereich aufgrund der größeren Abmessungen des LKW eine entsprechende Zeitdauer hinzuaddiert werden.

Die Erfindung betrifft weiterhin ein System zum bildlichen Erfassen eines Kraftfahrzeugs, das eine Störquelle mit sich führt, die geeignet ist, die bestimmungsgemäße Funktion eines Funksignalempfängers zu beeinträchtigen. Dieses System weist auf: eine Signalerfassungsvorrichtung, welche ausgebildet ist, ein Störsignal der Störquelle zu erfassen und einen Zeitverlauf einer Empfangssignalstärke des Störsignals aufzunehmen, eine Bildaufnahmevorrichtung zur Erzeugung von Bildaufnahmen von Kraftfahrzeugen oder von Kraftfahrzeugbereichen und eine Empfangssignalstärkezeitverlauf-Verarbeitungseinrichtung, welche ausgebildet ist, anhand des aufgenommenen Zeitverlaufs der Empfangssignalstärke, einen Optimalzeitpunkt oder einen Optimalzeitbereich zu bestimmen, an dem das Kraftfahrzeug, welches die Störquelle mit sich führt, in Relation zu der Bildaufnahmevorrichtung eine Position einnimmt, welche das Identifizieren des Kraftfahrzeugs anhand einer am Optimalzeitpunkt oder innerhalb des Optimalzeitbereiches erzeugten Bildaufnahme der Bildaufnahmevorrichtung von dem Kraftfahrzeug ermöglicht.

Das System ist mit einer Infrastruktur ausgestattet, die ermöglicht, eine Störquelle mitführende Kraftfahrzeuge zu ermitteln und sie mit ihrem jeweiligen Kennzeichen in Verbindung zu bringen. Die Empfangssignalstärkezeitverlauf-Verarbeitungseinrichtung ist vorzugsweise in die Signalerfassungsvorrichtung integriert d.h. ein Teil von ihr. Die Bildaufnahmevorrichtung und die Signalerfassungsvorrichtung können an einem Ort beispielsweise übereinander angeordnet sein. Vorzugsweise sind die Signalerfassungsvorrichtung und die Bildaufnahmevorrichtung fest oder starr miteinander verbunden bzw. miteinander gekoppelt. Bevorzugterweise sind sie in einem gemeinsamen Gehäuse untergebracht. Alternativ sind die Signalerfassungsvorrichtung und die Bildaufnahmevorrichtung beabstandet voneinander angeordnet, beispielsweise in einem Abstand von mehr als 50m, 100m oder 200m. Die Signalerfassungsvorrichtung und die Bildaufnahmevorrichtung können weiterhin jeweils Funkvorrichtungen aufweisen, wenn sie beabstandet angeordnet sind, um miteinander kommunizieren zu können.

Die Bildaufnahmevorrichtung und/oder die Signalerfassungsvorrichtung können portabel ausgebildet sein. Sie können aber auch an einem feststehenden Ort beispielsweise an einer Brücke, an einer Autobahn und/oder einer Straßenkreuzung fest installiert sein. Beispielsweise kann die Signalerfassungsvorrichtung portabel ausgebildet sein, beispielsweise an einem tragbaren Stativ angeordnet sein, während die Bildaufnahmevorrichtung stationär an einem feststehenden Ort angeordnet ist. Dies ist vorteilhaft, wenn die Signalerfassungsvorrichtung nicht mit einem Zentralrechner verbunden ist, sondern zum Auslesen der erfassten Störsignale mit einem Rechner verbunden werden muss. Alternativ kann die Bildaufnahmevorrichtung portabel ausgebildet sein, beispielsweise an einem tragbaren Stativ angeordnet sein, während die Signalerfassungsvorrichtung stationär an einem feststehenden Ort angeordnet ist. Dies ist beispielsweise vorteilhaft, wenn an dem Ort, an dem das System eine Störquelle mitführende Kraftfahrzeuge bildlich erfassen soll, Bauarbeiten stattfinden, die den Straßenverlauf ändern. Der Standort der portablen Bildaufnahmevorrichtung kann dann dem jeweiligen Straßenverlauf angepasst werden.

Weiterhin alternativ können die Signalerfassungsvorrichtung und die Bildaufnahmevorrichtung portabel ausgestaltet sein. Dabei können sie an einem tragbaren Stativ oder an jeweils einem einzelnen tragbaren Stativ angeordnet sein. Diese Variante ist vorteilhaft, wenn eine Straße Bauabschnitten unterworfen ist, sodass sich ihr Straßenverlauf mit der Zeit ändert. Weiterhin alternativ können die Signalerfassungsvorrichtung und die Bildaufnahmevorrichtung stationär ausgebildet sein, so dass sie in Betrieb an einem feststehenden Ort angeordnet sind. Diese Variante ist vorteilhaft, wenn es sich bei der Straße um eine Straße mit mehreren Fahrstreifen und/oder Standstreifen handelt. Im Falle eines Defekts einer portablen oder stationär angeordneten Signalerfassungsvorrichtung und/oder Bildaufnahmevorrichtung ist diese jeweils durch eine portable Vorrichtung schnell und einfach ersetzbar.

Die Bildaufnahmevorrichtung und/oder die Signalerfassungsvorrichtung können schwenkbar angeordnet sein. Vorteilhaft ist die Bildaufnahmevorrichtung schwenkbar ausgebildet. Dadurch wird eine frontseitige und rückseitige Bildaufnahme des die Störquelle mitführenden Kraftfahrzeugs mittels einer einzigen Bildaufnahmevorrichtung ermöglicht.

In einer bevorzugten Ausführungsform ist die Bildaufnahmevorrichtung ausgebildet, auf Anforderung der Empfangssignalstärkezeitverlauf-Verarbeitungseinrichtung zum Optimalzeitpunkt oder innerhalb des Optimalzeitbereiches eine Bildaufnahme von dem Kraftfahrzeug zu erzeugen und/ oder eine zum Optimalzeitpunkt oder innerhalb des Optimalzeitbereiches erzeugte Bildaufnahme des Kraftfahrzeugs zur Identifizierung des Kraftfahrzeugs bereitzustellen. Die Bildaufnahmevorrichtung ist bevorzugt eine Kamera. Die Kamera kann ausgebildet sein, Fotos zu machen. Alternativ oder zusätzlich ist sie vorzugsweise ausgelegt, Bildsequenzen zu machen oder Videosequenzen aufzunehmen.

Die Empfangssignalstärkezeitverlauf-Verarbeitungseinrichtung ist vorzugsweise eine Datenverarbeitungseinrichtung der Signalerfassungsvorrichtung, beispielsweise ein Prozessor der Signalerfassungsvorrichtung. Es kann sich bei der Empfangssignalstärkezeitverlauf-Verarbeitungseinrichtung jedoch auch um eine Datenverarbeitungseinrichtung handeln, welche - gegebenenfalls gemeinsam mit einer Bildverarbeitungseinrichtung oder die Funktion einer Bildverarbeitungseinrichtung ebenfalls umfassend - von der Bildaufnahmevorrichtung umfasst ist. Vorzugsweise weist die Empfangssignalstärkezeitverlauf-Verarbeitungseinrichtung einen Mikroprozessor oder einen Mikrokontroller auf. Ferner kann die Empfangssignalstärkezeitverlauf-Verarbeitungseinrichtung einen Speicher sowie Kommunikationsmodule aufweisen, über welche sie mit der Signalerfassungsvorrichtung und/oder der Bildaufnahmevorrichtung kommuniziert.

Insbesondere weist die Signalerfassungsvorrichtung wenigstens eine Empfangsantenne zum Empfang von wenigstens einem Störsignal der Störquelle auf. Vorzugsweise ist die Empfangsantenne durch wenigstens eine Richtantenne, beispielsweise eine Yagi-Uda-Antenne, eine Logarithmisch-Periodische-Dipol-Antenne (log-periodic dipole antenna, auch als Logper-Antenne oder LPDA-Antenne bezeichnet), eine Parabolantenne, eine Hohlleiterantenne oder eine Hornantenne, gebildet. Eine Yagi-Uda-Antenne ist eine Richtantenne zum Empfang oder zum Senden elektromagnetischer Wellen im Bereich von ca. 10 MHz bis ca. 2500 MHz. Sie weist einen Dipol, eine Reihe von parallel angeordneten Direktoren und optional einen Reflektor auf. Eine LPDA-Antenne ist eine Breitbandantenne, die eine Anzahl von Dipolantennen aufweist, deren Länge und Abstand zur Strahlungsrichtung hin abnehmen, sodass sie neben der Breitbandigkeit gleichzeitig eine Richtwirkung aufweist. Eine LPDA-Antenne weist den Vorteil der Breitbandigkeit gegenüber einer schmalbandigen Yagi-Uda-Antenne auf, aber der erzielbare Antennengewinn liegt unter dem einer gleich großen Yagi-Uda-Antenne.

Die azimutale Richtwirkung von Logper-Antennen dieses Beispiels oder von Yagi-Uda-Antennen ist von großem Vorteil bei der Störsignalerfassung, weil damit die Erfassung von Störsignalen auf Störquellen fokussiert werden kann, die sich aus / in einer bestimmten Richtung - insbesondere auf einer Fahrbahn, auf der die Bewegung der Störquelle näherungsweise auf die Dimension der Länge beschränkt ist - an die Signalerfassungsrichtung nähert oder sich von ihr entfernt. Gegenüber einer Antenne ohne Richtcharakteristik ist die Dynamik des erfassten Zeitverlaufs der Empfangssignalstärke des Störsignals deutlich erhöht, was die Bestimmung des Optimalzeitpunktes oder des Optimalzeitbereiches aus dem Zeitverlauf der Empfangssignalstärke vereinfacht und verbessert.

Eine Parabolantenne bündelt Strahlung im Brennpunkt eines metallischen Parabolspiegels, wo die Strahlung von einem Detektor wie beispielsweise eine Hornantenne erfasst wird. Eine Hohlleiter-Antenne ist ein Wellenleiter für elektromagnetische Wellen vorwiegend im Frequenzbereich von 1 GHz bis 200 GHz in Form eines Metallrohrs mit vorzugsweise rechteckigem, kreisförmigem oder elliptischem Querschnitt.

Der Hohlleiter, der die Sendeleistung zur Antenne leitet, kann von seinem offenen Ende die elektromagnetische Welle in den freien Raum abstrahlen. Der Wellenwiderstand des Vakuums hat einen anderen Wert als der Hohlleiter. Aus diesem Grund treten an dieser Stelle unerwünschte Reflexionen auf. Daher weitet man die mechanischen Abmessungen des Hohlleiters an der Stelle des Strahlungsaustritts der elektromagnetischen Welle auf, um einen allmählichen Übergang zu erreichen. Diese Konstruktion nennt man wegen der hornartigen Form eine Horn-Antenne. Die Hornantenne ist eine Antenne für Mikrowellen und weist eine an die Form eines Exponentialtrichters angenäherte Metallfläche auf, die optional in einen Hohlleiter mündet. Eine Hornantenne weist eine vergleichsweise hohe Bündelung in der Richtcharakteristik auf. Sie kann als eigenständiger Strahler oder zur Speisung im Brennpunkt der Parabolantenne eingesetzt werden.

Die transversale Richtwirkung der Parabolantenne, des Hohlleiters und der Hornantenne bilden den Vorteil der eindimensionalen Richtwirkung der Logper- und der Yagi-Uda-Antenne in die zweite Dimension fort. Je nach Einsatzfall (Frequenz des Störsignals, Stärke des Störsignals, Lage der Signalerfassungsvorrichtung bezüglich der Bewegungsbahn der Störquelle und/oder bezüglich der Bildaufnahmevorrichtung usw.) wird aufgrund der Eigenschaften der genannten Richtantennentypen der eine oder der andere Typ von Richtantenne zur Störsignalerfassung zu bevorzugen sein.

In einer bevorzugten Ausführungsform weist das System weiterhin eine Signalpeilvorrichtung auf, welche ausgebildet ist, das Störsignal der Störquelle zu erfassen, mindestens einen Peilwinkel der Störquelle zu ermitteln, anhand des ermitteln Peilwinkels einen Bildreihenaufnahme-Startzeitpunkt zu bestimmen und den bestimmten Bildreihenaufnahme-Startzeitpunkt an die Bildaufnahmevorrichtung zu übermitteln. Hierbei ist die Bildaufnahmevorrichtung ausgebildet, in Abhängigkeit von dem Bildreihenaufnahme-Startzeitpunkt eine Reihe von mehreren Bildaufnahmen zu erzeugen, und die Empfangssignalstärkezeitverlauf-Verarbeitungseinrichtung oder eine hiervon getrennte Bildverarbeitungseinrichtung ist ausgebildet, aus der Reihe der mehreren Bildaufnahmen wenigstens eine Bildaufnahme auszuwählen, die zu dem Optimalzeitpunkt oder innerhalb des Optimalzeitbereiches erzeugt wurde. Eine solche Signalerfassungsvorrichtung und das Verfahren zum Bestimmen des Optimalzeitpunktes oder des Optimalzeitbereiches mithilfe einer solchen Vorrichtung wird in der am gleichen Anmeldetag wie die vorliegende Anmeldung vom selben Anmelder eingereichte Patentanmeldung mit internem Aktenzeichen TCL-101-EP offenbart, deren gesamte Offenbarung hiermit zur Bezugnahme übernommen wird.

In einer bevorzugten Ausführungsform weist die Signalpeilvorrichtung einen Doppler-Peiler, einen Watson-Watt-Peiler und/oder einen korrelativen Interferometerpeiler auf. Beispielsweise stellt die Signalpeilvorrichtung einen Doppler-Peiler dar, der eine Vielzahl von Peilantennen aufweist, die kreisförmig auf einem Peilergehäuse angeordnet sind. Vorzugsweise ist die Signalpeilvorrichtung an einer Straße derart angeordnet, dass ihre Peilungsebene in einer Umgebung der Signalpeilvorrichtung parallel oder senkrecht zu der Straßenoberfläche angeordnet ist. Bei paralleler Anordnung der Peilungsebene zur Straßenoberfläche bildet der Peilungswinkel die Winkelkoordinate in einem Polarkoordinatensystem für die Straßenoberfläche. Bei senkrechter Anordnung der Peilungsebene zur Straßenoberfläche ist die Signalpeilvorrichtung vorzugsweise an einem gegenüber der Straßenoberfläche erhöhten Punkt angeordnet, beispielsweise an einer Brücke oder einer Autobahnschildhalterung montiert. Der ermittelte Peilungswinkel ist in diesem Fall null, wenn das Kraftfahrzeug sich direkt unterhalb der Signalpeilvorrichtung befindet.

Das System kann weiterhin eine Zähleinrichtung aufweisen, die ausgelegt ist, die ermittelten Kraftfahrzeuge zu zählen und ggf. zu klassifizieren. Die Zähleinrichtung kann Teil der Empfangssignalstärkezeitverlauf-Verarbeitungseinrichtung sein.

Nachfolgend wird die Erfindung anhand von Ausführungsbeispielen näher erläutert. Hierbei zeigen
- Fig. 1a und 1b: schematisch jeweils eine Draufsicht und Seitenansicht auf eine Signalerfassungsvorrichtung ;
- Fig. 1c und 1e: symbolisch jeweils eine Draufsicht einer Signalerfassungsvorrichtung;
- Fig. 1d und 1f: schematisch jeweils eine Richtcharakteristik der in Fig. 1c bzw. 1e gezeigten Signalerfassungsvorrichtung ;
- Fig. 2a und 2b: schematisch ein erfindungsgemäßes System in einer ersten Ausführungsform des erfindungsgemäßen Systems und einen aufgenommenen Zeitverlauf einer Empfangssignalstärke eines Störsignals;
- Fig. 2c: schematisch ein weiteres erfindungsgemäßes System in einer zweiten Ausführungsform und einen aufgenommenen Zeitverlauf einer Empfangssignalstärke eines Störsignals;
- Fig. 3a und 3b: schematisch jeweils ein noch weiteres erfindungsgemäßes System in einer dritten Ausführungsform und einen aufgenommenen Zeitverlauf einer Empfangssignalstärke eines Störsignals;
- Fig. 4a und 4b: schematisch jeweils ein noch weiteres erfindungsgemäßes System in einer vierten Ausführungsform und einen aufgenommenen Zeitverlauf einer Empfangssignalstärke eines Störsignals;
- Fig. 4c: eine Tabelle zu den in Fig. 4a und 4b gezeigten Ausführungsformen;
- Fig. 5a: schematisch ein noch weiteres erfindungsgemäßes System in einer fünften Ausführungsform;
- Fig. 5b bis 5d: schematisch jeweils einen aufgenommenen Zeitverlauf einer Empfangssignalstärke eines Störsignals;
- Fig. 6a und 6b: schematisch ein noch weiteres erfindungsgemäßes System in einer sechsten Ausführungsform;
- Fig. 6c und 6d: schematisch jeweils aufgenommene Zeitverläufe einer Empfangssignalstärke eines Störsignals;
- Fig. 7: schematisch ein noch weiteres erfindungsgemäßes System in einer siebten Ausführungsform und aufgezeichnete Zeitverläufe einer Empfangssignalstärke eines Störsignals; und
- Fig. 8a und 8b: schematisch ein noch weiteres erfindungsgemäßes System in einer achten Ausführungsform mit einem aufgenommenen Zeitverlauf einer Empfangssignalstärke eines Störsignals in Fig. 8b.

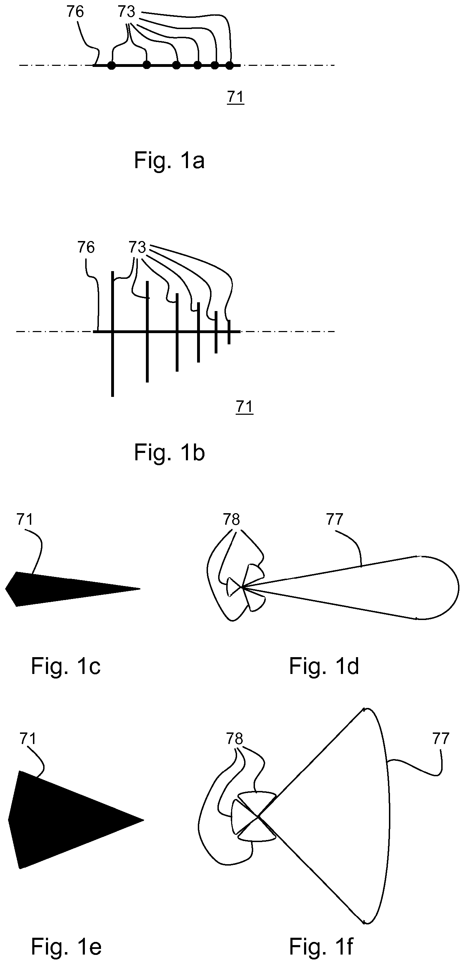

Fig. 1a und 1b zeigen schematisch jeweils eine Draufsicht (Fig. 1a) und eine Seitenansicht (Fig. 1b) auf ein Beispiel für eine Empfangsantenne 71 in Form einer Logper-Antenne, auch Logarithmisch-Periodische-Dipol-Antenne (Log Periodic Dipole Array Antenna, LPDA-Antenne) genannt. Die Empfangsantenne 71 weist eine Mehrzahl Dipolantennen 73 auf, deren Abstände zueinander entlang einer Strahlungsrichtung abnehmen. Die Empfangsantenne 71 kann beispielsweise Drähte, feste Stäbe oder Leiterbahnen auf einer Isolierstoffplatte als Dipolantennen 73 aufweisen, die über eine alle Dipolantennen 73 verbindende Leitung 76 erregt werden. Die Empfangsantenne 71 weist eine räumliche Abfolge von gestreckten Dipolantennen 73 auf, die mit der elektrisch leitfähigen verbindenden Leitung 76 zwischen jedem gestreckten Dipol gekreuzt sind, um die Dipole phasenrichtig zu erregen. Der räumliche Abstand der einzelnen Dipolantennen 73, welcher eine logarithmische Funktion darstellt, nimmt zur Spitze der LPDA-Antenne ab. Die sich quer zur verbindenden Leitung 76 erstreckende Länge der einzelnen Dipolantennen 73 nimmt zur Spitze der LPDA-Antenne hin ab.

Fig. 1c und 1e zeigen symbolisch jeweils eine Draufsicht (Fig. 1c) und eine Seitenansicht (Fig. 1e) auf eine Empfangsantenne 71 des vorstehend beschriebenen Typs der Logper-Antenne. Durch unterschiedliche Steigung des Abstands zwischen den Dipolantennen 73 und durch Steigerung der Länge der Dipolantennen 73 lassen sich sowohl extrem breitbandige LPDA mit geringerem Gewinn als auch weniger breitbandige LPDA mit höherem Gewinn herstellen. Der Antennengewinn hängt zudem von der Anzahl der Dipolantennen ab. Er beträgt üblicherweise ca. 6 dB bis 10 dB.

Fig. 1d und 1f zeigen schematisch jeweils eine Horizontal-Richtcharakteristik (Fig. 1d) und eine Vertikal-Richtcharakteristik (Fig. 1f) der in Fig. 1a bzw. 1b schematisch und in Fig. 1c bzw. 1e symbolisch gezeigten Empfangsantenne 71. Die Richtcharakteristiken geben an, aus welcher Richtung die Empfangsantennen 71 in den Fig. 1c und 1e gezeigten Orientierungen wie stark Signale empfangen (können). In der in Fig. 1c gezeigten Orientierung weist die Empfangsantenne 71 eine in Fig. 1d gezeigte Horizontal-Richtcharakteristik in Keulenform mit einer starken azimutalen Richtwirkung in der longitudinalen Antennenspitzenrichtung auf. Die Richtcharakteristik weist eine Hauptstrahlungskeule 77 und drei Nebenstrahlungskeulen 78 auf. Mittels der Hauptstrahlungskeule 77 kann zielgenau ein Signal aus relativ weiter Entfernung empfangen werden. In der in Fig. 1e gezeigten Orientierung weist die Empfangsantenne 71 eine in Fig. 1f gezeigte Richtcharakteristik in Keulenform mit einer weniger starken Richtwirkung bezüglich der Elevationsrichtung in longitudinaler Richtung (Antennenspitzenrichtung) auf. Diese Richtcharakteristik weist ebenfalls eine Hauptstrahlungskeule 77 und drei Nebenstrahlungskeulen 78 auf.

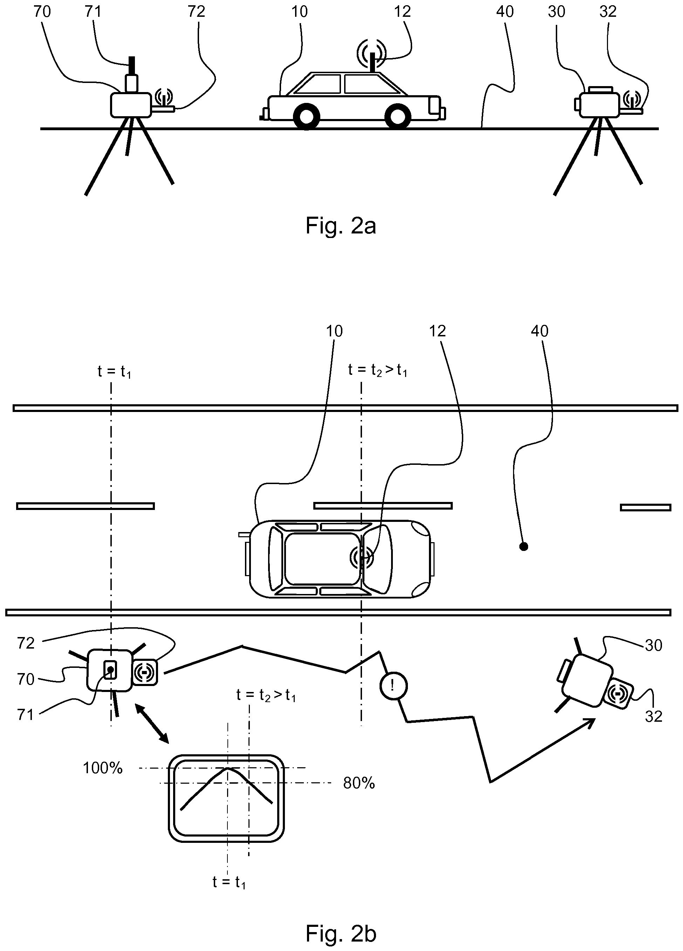

Fig. 2a und 2b zeigen schematisch jeweils ein System zum bildlichen Erfassen eines Kraftfahrzeugs in einer ersten Ausführungsform und Fig. 2b zusätzlich einen aufgenommenen Zeitverlauf einer Empfangssignalstärke eines Störsignals. Das System ist in der ersten Ausführungsform als ein portables Gesamtsystem ausgestaltet, das an einem Straßenrand aufstellbar ist. Das System weist eine portable Signalerfassungsvorrichtung 70 und eine portable Bildaufnahmevorrichtung 30 auf. Eine Empfangssignalstärkezeitverlauf-Verarbeitungseinrichtung (nicht gezeigt) ist in die Signalerfassungsvorrichtung 70 integriert. Die Signalerfassungsvorrichtung 70 ist mit einer Empfangsantenne 71 am Straßenrand einer Straßenoberfläche 40 angeordnet, und die Bildaufnahmevorrichtung 30 ist ebenfalls am Straßenrand der Straßenoberfläche 40 angeordnet, jedoch 50 m in Fahrtrichtung eines Kraftfahrzeugs 10 von der portablen Signalerfassungsvorrichtung 70 entfernt. Das auf der Straßenoberfläche 40 entlangfahrende Kraftfahrzeug 10 führt eine Störquelle 12 mit sich. Die Bildaufnahmevorrichtung 30 ist eine Kamera und ausgerichtet, Bildaufnahmen entgegen Fahrtrichtung des Kraftfahrzeugs 10 nach der Passage desselben an der Signalerfassungsvorrichtung 70 aufzunehmen. Die Empfangsantenne 71 ist beispielsweise ein einfacher Dipol, der ungerichtet homogen aus allen Raumrichtungen parallel zur Straßenoberfläche 40 Signale empfangen kann.

In Fig. 2a ist in Seitenansicht gezeigt, wie das Kraftfahrzeug 10, das die Störquelle 12 mit sich führt, auf einer Straßenoberfläche 40 fährt. Es hat die Signalerfassungsvorrichtung 70 passiert, aber die Bildaufnahmevorrichtung 30 noch nicht passiert. Die Störquelle 12 ist üblicherweise im Kraftfahrzeug 10 nahe eines vom Kraftfahrzeug mitgeführten GNSS-Empfängers (nicht gezeigt) angeordnet, um den GNSS-Empfänger derart zu stören, dass er keine Position ermitteln kann (Jamming) oder nicht die wahre Position ermitteln kann (Spoofing).

In Fig. 2b ist eine Draufsicht auf die Straßenoberfläche 40 der in Fig. 2a gezeigten Situation gezeigt. Mittels der Signalerfassungsvorrichtung 70 wird ein Störsignal der Störquelle 12 in dem Kraftfahrzeug 10 erfasst und ein Zeitverlauf der Empfangsstärke des Störsignals ermittelt. Wenn das Kraftfahrzeug 10 in einen Detektionsbereich der Empfangsantenne 71 eintritt, nimmt die Signalerfassungsvorrichtung 70 einen Gauß-ähnlichen Zeitverlauf der Empfangssignalstärke des Störsignals auf und bestimmt während der Aufnahme kontinuierlich das aktuelle Empfangssignalstärkemaximum. Das aktuelle Empfangssignalstärkemaximum wird dann zum absoluten Empfangssignalstärkemaximum, wenn die Empfangssignalstärke nicht weiter steigt, sondern insbesondere abnimmt. Ist, nach Bestimmung eines absoluten Empfangssignalstärkemaximums, die Empfangssignalstärke auf einen vorgegebenen Teil des absoluten Empfangssignalstärkemaximums abgefallen, beispielsweise auf 80%, wie in Fig. 2b gezeigt, so gibt die Signalerfassungsvorrichtung 70 ein Triggersignal an die Bildaufnahmevorrichtung 30 zur unverzögerten Bildaufnahme des frontseitigen Kraftfahrzeugkennzeichens entgegen der Fahrtrichtung des Kraftfahrzeugs 10 zum Zeitpunkt t=t₂.

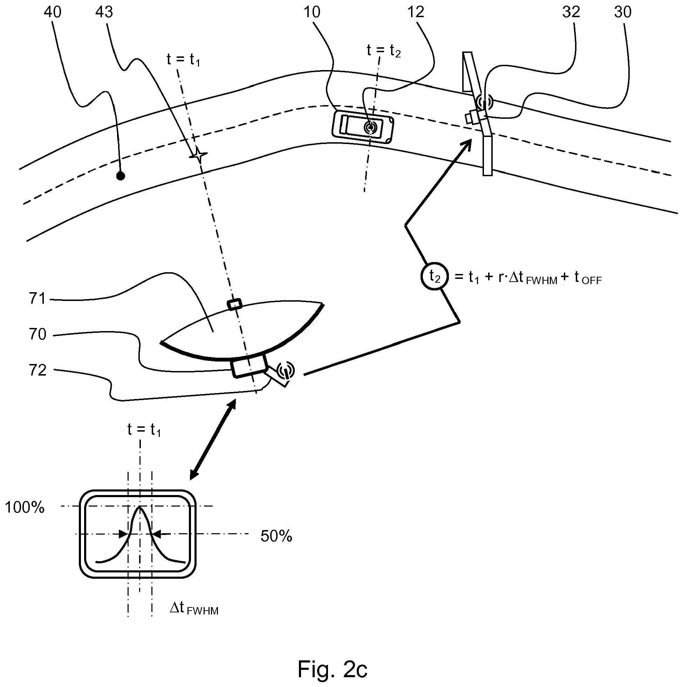

Fig. 2c zeigt schematisch ein weiteres erfindungsgemäßes System in einer zweiten Ausführungsform und einen aufgenommenen Zeitverlauf einer Empfangssignalstärke eines Störsignals. Das System gemäß der zweiten Ausführungsform weist eine portable Signalerfassungsvorrichtung 70 mit einer Empfangsantenne 71 in 100 m bis 500 m Entfernung von einem weiter unten definierten Zielpunkt 43 auf der Straßenoberfläche 40 und eine fest an einer Brücke 45 über der Straßenoberfläche 40 installierte Bildaufnahmeeinrichtung 30 mit einer Kamera, einer Bildaufnahme-Auslöseeinrichtung und einer Kamera-Funkvorrichtung 32 auf. Alternativ kann die Bildaufnahmeeinrichtung 30 auch portabel straßenseitig angeordnet sein, was in Fig. 2c nicht dargestellt ist. Die Empfangsantenne 71 ist eine (ähnlich einem Regenschirm) faltbare transportable Parabolantenne von 3 m Durchmesser mit einer rotationssymmetrischen Empfangskeule, d. h. einem rotationssymmetrischen Öffnungswinkel, von 5° im Empfangsbereich von 1 bis 2 GHz. Sie steht vorzugsweise gegenüber der Straßenoberfläche erhöht und ist vorzugsweise senkrecht zur Fahrtrichtung auf einen Zielpunkt 43 auf der Straßenoberfläche 40 gerichtet. Die Bildaufnahmevorrichtung 30 ist gegenüber diesem Zielpunkt 43 in Fahrtrichtung eines Kraftfahrzeugs 10 in einem Weglängenabstand von 100 m bis 500 m versetzt angeordnet. Das Kraftfahrzeug 10 führt eine Störquelle 12 mit.

Das von der Signalerfassungsvorrichtung 70 empfangene Störsignal der Störquelle 12 weist einen gaußförmigen zeitlichen Signalverlauf mit einer Halbwertsbreite Δt_{FWHM} von 1 Sekunde und einem Maximum zum Zeitpunkt t₁ auf. Aus diesen Werten berechnet eine Empfangssignalstärkezeitverlauf-Verarbeitungseinrichtung der Signalerfassungsvorrichtung 70 einen Zeitpunkt t₂ = t₁ + r·ΔM_{FWHM} + ΔT_{OFF}, zu dem das Kraftfahrzeug 10 voraussichtlich in einer Position ist, in der die Bildaufnahmevorrichtung 30 das Kraftfahrzeug 10 samt seines frontseitigen Kraftfahrzeug-Kennzeichens erfassen kann. Δt_{FWHM} ist zumindest näherungsweise proportional zur Kraftfahrzeuggeschwindigkeit, r ist abhängig von der Entfernung der Empfangsantenne 71 zum Zielpunkt 43, und die Offset-Zeitdifferenz ΔT_{OFF} ist abhängig von dem Weglängenabstand zwischen dem Zielpunkt 43 und der Bildaufnahmevorrichtung 30. Dieser Zeitpunkt t₂ wird per Funkvorrichtung 72 an die an die Kamerafunkvorrichtung 32 und Bildaufnahmevorrichtung 30 gekoppelte Bildaufnahme-Auslöseeinrichtung gesendet, die zum Zeitpunkt t₂ eine Bildaufnahme in der Bildaufnahmevorrichtung 30 auslöst.

In einer Weiterbildung wird bei der Bestimmung der Offset-Zeitdifferenz ΔT_{OFF} eine mögliche, bestimmte Geschwindigkeitsänderung des Kraftfahrzeugs 10 einbezogen, und die Bildaufnahmeeinrichtung 30 führt zeitlich äquidistant über die Dauer der Halbwertsbreite Δt_{FWHM} ab dem berechneten Zeitpunkt t₂ eine Serie von zehn Bildaufnahmen durch.

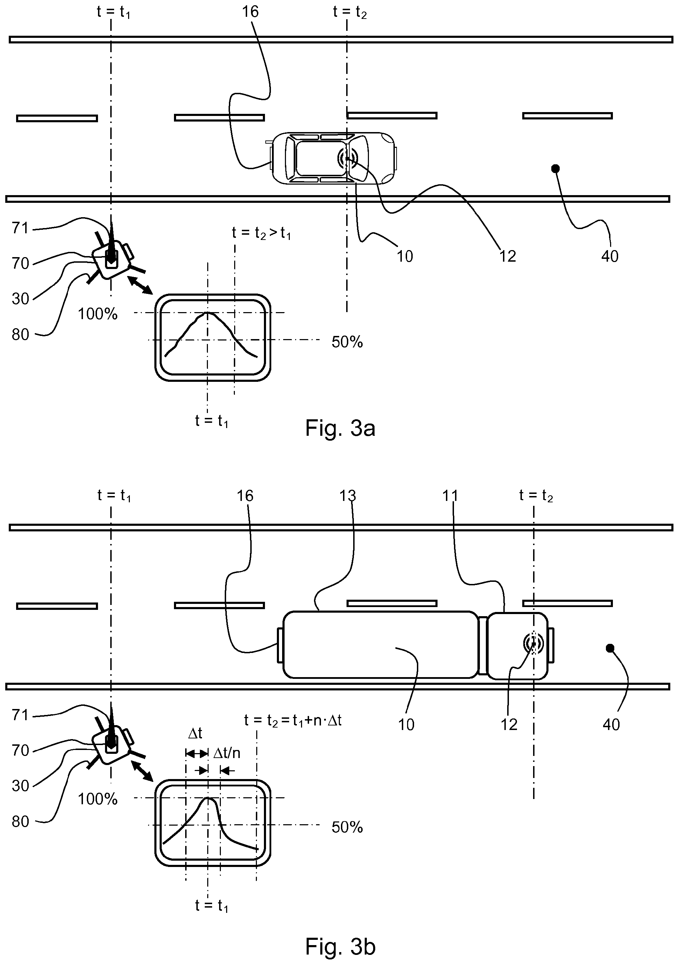

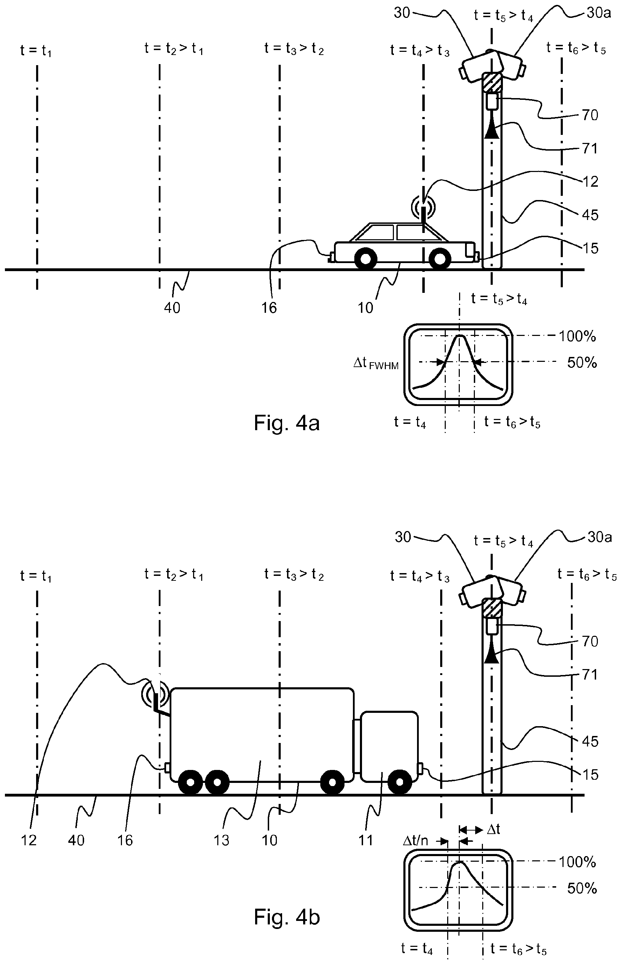

Fig. 3a und 3b zeigen schematisch jeweils ein noch weiteres erfindungsgemäßes System in einer dritten Ausführungsform und einen aufgenommenen Zeitverlauf einer Empfangssignalstärke eines Störsignals bei unterschiedlichen Kraftfahrzeugtypen. In Fig. 3a ist eine Situation dargestellt, bei welcher auf der Straßenoberfläche 40 ein eine Störquelle 12 mitführendes Kraftfahrzeug 10 in Form eines Personenkraftwagens (PKWs) fährt. Das System ist in der dritten Ausführungsform als portables Gesamtsystem am Straßenrand einer Straßenoberfläche 40 ausgebildet. Das System weist eine Signalerfassungsvorrichtung 70 und eine Bildaufnahmevorrichtung 30 übereinander auf einem Stativ 80 auf. Alternativ kann das System an einer Brücke (nicht gezeigt) über der Straßenoberfläche 40 befestigt sein, wie beispielsweise in Fig. 4a, 4b, 5a und 7 gezeigt ist.

Die Bildaufnahmevorrichtung 30 ist ausgerichtet, Bildaufnahmen in Fahrtrichtung nach der Passage eines eine Störquelle 12 mitführenden Kraftfahrzeugs 10 aufzunehmen. Die Empfangsantenne 71, beispielsweise eine LPDA-Empfangsantenne gemäß Fig. 1a bis Fig. 1f, wobei die in Fig. 1c gezeigte Antenne in Fig. 3a symbolisch dargestellt ist, ist parallel zur Straßenoberfläche 40 und senkrecht zur Fahrtrichtung des Kraftfahrzeugs 10 ausgerichtet. Sie kann jedoch auch senkrecht zur Straßenoberfläche 40 in Richtung auf die Straßenoberfläche 40 ausgerichtet sein, insbesondere dann, wenn sie an einer Brücke angeordnet ist, was in Fig. 3a jedoch nicht gezeigt ist. Die Signalerfassungsvorrichtung 70 nimmt einen Gauß-ähnlichen zeitabhängigen Empfangssignalstärkeverlauf auf und bestimmt während der Aufnahme kontinuierlich das aktuelle Empfangssignalstärkemaximum. Das aktuelle Empfangssignalstärkemaximum wird dann zum absoluten Empfangssignalstärkemaximum, wenn die Empfangssignalstärke nicht weiter steigt, sondern insbesondere abnimmt. Dies ist bei t=t₁ der Fall, t₁ stellt den Zeitpunkt dar, an dem das Kraftfahrzeug 10 die Signalerfassungsvorrichtung 70 passiert. Ist, nach Bestimmung eines absoluten Empfangssignalstärkemaximums, die Empfangssignalstärke auf einen vorgegebenen Teil des absoluten Empfangssignalstärkemaximums abgefallen, beispielsweise auf 50% des absoluten Empfangssignalstärkemaximums, so gibt die Signalerfassungsvorrichtung 70 ein Signal an die Bildaufnahmevorrichtung 30 zur unverzögerten Bildaufnahme des rückseitigen Kraftfahrzeugkennzeichens 16 in der Fahrtrichtung des Kraftfahrzeugs 10 zum Zeitpunkt t=t₂.

Fig. 3b stellt eine Situation dar, bei dem anstelle eines PKWs ein Lastkraftwagen (LKW) mit einer Störquelle an dem System aus der Fig. 3a vorbei fährt. Aus dem Empfangssignalstärkeverlauf wird dessen Asymmetrie, insbesondere dessen Schiefe bestimmt. Ist der Empfangssignalstärkeverlauf (wie in Fig. 3b gezeigt) deutlich linksschief, wenn also ein negativer Schwellwert der Schiefe unterschritten wird, so ist davon auszugehen, dass der Störsender 12 im Kraftfahrzeug 10 im Fahrerhaus 11 eines LKWs angebracht ist, dessen Auflieger 13 das Störsignal 12 entgegen der Fahrtrichtung des Kraftfahrzeugs 10 abschattet. Für ein solches Kraftfahrzeug 10 muss eine Bildaufnahme später erfolgen, als im vorgenannten Fall eines Kraftfahrzeugs 10 in Form eines PKWs, weil das rückwärtige Kennzeichen 16 bei einem solchen LKW weiter von der Störquelle 12 entfernt ist als im Falle eines eher symmetrischen Empfangssignalstärkeverlaufs, der für kleine Kraftfahrzeuge wie einem PKW typisch ist.

Das Signal an die Bildaufnahmevorrichtung 30 zur Durchführung einer Aufnahme umfasst dann eine relative Aufnahmeverzögerungszeit ΔT_{OFF} > 0 oder wird zu einer um die relative Aufnahmeverzögerungszeit ΔT_{OFF} > 0 verspäteten absoluten Aufnahmezeit t₂ + ΔT_{OFF} an die Bildaufnahmevorrichtung 30 gesendet. Die Aufnahmeverzögerungszeit ΔT_{OFF} bemisst sich jeweils als fester Wert bei Feststellung der Schiefe und/ oder wird aus der Steigung des Empfangssignalstärkeverlaufs im linksschiefen Bereich (Tangente, Sekante, Mittelwert mehrerer Tangenten und/ oder Sekanten) abgeleitet wird. Beispielsweise kann ΔT_{OFF} = - n g·Δt sein, mit g als Skalierfaktor und n > 1 als dem Verhältnis der zeitlichen Abstände der Empfangssignalstärken bei 50% des Maximalwertes jeweils zu dem Zeitpunkt der maximalen Empfangssignalstärke. Alternativ kann die Bildaufnahmevorrichtung 30 auch angewiesen werden, über einen in ähnlicher Weise bestimmten Zeitraum mehrere Aufnahmen durchzuführen, diese auf das Vorhandensein eines Kraftfahrzeugkennzeichens 16 auszuwerten und eine Aufnahme, die das Kraftfahrzeugkennzeichen 16 enthält, an eine Zentrale weiterzuleiten oder mit einer Kennung im Bild-Datei-Namen zu versehen.

Fig. 4a und 4b zeigen schematisch jeweils ein noch weiteres erfindungsgemäßes System in einer vierten Ausführungsform und einen aufgenommenen Zeitverlauf einer Empfangssignalstärke eines Störsignals. Das System ist in der vierten Ausführungsform in Seitenansicht gezeigt. Das System ist am Straßenrand einer Straßenoberfläche 40 angeordnet, auf der ein eine Störquelle 12 mitführendes Kraftfahrzeug 10 fährt. Es weist eine Signalerfassungsvorrichtung 70 mit Empfangsantenne 71, eine Bildaufnahmevorrichtung 30 und eine weitere Bildaufnahmevorrichtung 30a übereinander an einer Brücke 45 über der Straßenoberfläche 40 auf. Die Signalerfassungsvorrichtung 70, die Bildaufnahmevorrichtung 30 und die weitere Bildaufnahmevorrichtung 30a können aber ebenfalls auf einem Stativ wie in Fig. 3a und Fig. 3b dargestellt angeordnet sein, was hier nicht gezeigt ist.

Die in Fig. 4a und 4b gezeigte Bildaufnahmevorrichtung 30 ist ausgerichtet, Bildaufnahmen von dem Fahrstreifen (nicht gezeigt) entgegen der Fahrtrichtung des Kraftfahrzeugs 10 vor der Passage des Kraftfahrzeugs 10 an der Signalerfassungsvorrichtung 70 aufzunehmen, während die weitere Bildaufnahmevorrichtung 30a ausgerichtet sind, Bildaufnahmen in der Fahrtrichtung des Kraftfahrzeugs 10 nach der Passage des Kraftfahrzeugs 10 an der Signalerfassungsvorrichtung 70 auf einem parallelen Fahrsteifen (nicht gezeigt) aufzunehmen. Die Empfangsantenne 71 ist eine rotationssymmetrische Hornantenne mit einem Öffnungswinkel von 10°, deren Empfangskeule senkrecht zur Straßenoberfläche 40 in Richtung auf die Straße ausgerichtet ist. Sie kann aber alternativ parallel zur Straßenoberfläche 40 und senkrecht zur Fahrtrichtung des Kraftfahrzeugs 10 ausgerichtet sein, was in Fig. 4a und 4b nicht gezeigt ist.

In Fig. 4a ist das Kraftfahrzeug 10, das eine Störquelle 12 mit sich führt, ein PKW. Die Bildaufnahmevorrichtung 30 nimmt fortlaufend zu Zeitpunkten t₁, t₂ und t₃ Bilder der Straße auf, zumindest der in Fig. 4a gezeigten Straßenoberfläche 40, auf dem das in Fig. 4a abgebildete Kraftfahrzeug 10 in Form eines PKWs fährt, so dass auch das Bild des allfällig mit der Störquelle 12 ausgerüsteten Kraftfahrzeugs 10 aufgenommen wird zu einem Moment, in dem noch nicht durch die Signalerfassungsvorrichtung 70 detektiert wurde, dass sie ein Kraftfahrzeug 10 mit einer Störquelle 12 passieren würde.

Die Signalerfassungsvorrichtung 70 nimmt während der Passage des Kraftfahrzeugs 10 einen Gauß-ähnlichen zeitabhängigen Empfangssignalstärkeverlauf auf und bestimmt während der Aufnahme kontinuierlich das aktuelle Empfangssignalstärkemaximum. Das aktuelle Empfangssignalstärkemaximum wird dann zum absoluten Empfangssignalstärkemaximum, wenn die Empfangssignalstärke nicht weiter steigt, sondern insbesondere abnimmt. Zum Zeitpunkt t₅ des Empfangssignalstärkemaximums passiert die Störquelle 12 die Signalerfassungsvorrichtung 70.

Ist, nach Bestimmung eines absoluten Empfangssignalstärkemaximums, die Empfangssignalstärke auf einen vorgegebenen Teil des absoluten Empfangssignalstärkemaximums abgefallen beispielsweise 20%, so ermittelt die Signalerfassungsvorrichtung 70 eine Halbwertsbreite des Empfangssignalstärkeverlaufs, das ist die Zeitdifferenz Δt_{FWHM}, während der die Empfangssignalstärke mehr als die Hälfte des Empfangssignalstärkemaximums betrug. Bei hoher Geschwindigkeit ist die Halbwertsbreite kleiner, als bei niedriger Geschwindigkeit. Unter Verwendung eines festen Skalierfaktors f oder eines variablen Skalierfaktors, beispielsweise als Funktion f(Δt_{FWHM}), lässt sich die ideale Aufnahmezeit tᵢ der zum die Störquelle 12 mitführenden Kraftfahrzeug 12 gehörenden Bildaufnahme wie folgt berechnen: tᵢ = t₅ - f·Δt_{FWHM}. Es wird dann die Bildaufnahme zur Ermittlung des frontseitigen Kraftfahrzeugkennzeichens 15 des die Störquelle 12 mitführenden Kraftfahrzeugs 10 ausgewählt, die zeitlich nächstgelegen vor dem idealen Aufnahmezeitpunkt liegt, d. h. wenn t₂ > tᵢ > t₃, dann wird die Aufnahme zum Zeitpunkt t₂ ausgewählt, wenn |tᵢ - t₂| < |tᵢ - t₃|.

Da bei einer einzigen Empfangsantenne 71, die über einer Straße mit jeweils einem Fahrstreifen pro Fahrtrichtung angeordnet ist, das Problem besteht, keinen Unterschied in der Fahrtrichtung des die Störquelle 12 mitführenden Kraftfahrzeugs 10 erkennen zu können, nimmt eine weitere Bildaufnahmevorrichtung 30a in Fahrtrichtung Bilder von dem parallelen Fahrstreifen für den entgegengesetzten Verkehr in gleicher Weise auf wie für den Fahrstreifen des in Fig. 4a abgebildeten Kraftfahrzeugs 10. Auch von den durch die von der weiteren Bildaufnahmevorrichtung 30a aufgenommenen Bildern wird gemäß der zuvor beschriebenen Vorschrift wenigstens eine Bildaufnahme ausgewählt. Zeigen eine ausgewählte Bildaufnahme der Bildaufnahmevorrichtung 30 und eine weitere ausgewählte Bildaufnahme der weiteren Bildaufnahmevorrichtung 30a jeweils ein Kraftfahrzeug, so entspricht dies einem bezüglich des Systems symmetrischen Gegenverkehr, der ohne Weiteres keine Aussage darüber zulässt, welches der beiden Kraftfahrzeuge den Störsender 12 mit sich führt. Die Identifizierung eines der beiden Kraftfahrzeuge als Störsender-Träger gelingt dann mit wenigstens einer zusätzlichen Empfangsantenne, wie beispielsweise in den nachfolgenden fünften und sechsten Ausführungsformen dargestellt.

Fig. 4b stellt zeigt die in Fig. 4a gezeigte vierte Ausführungsform in einer Situation, bei der sich anstatt des PKW ein LKW mit der Störquelle der Brücke 45 nähert. Aus dem Empfangssignalstärkeverlauf wird dessen Asymmetrie z. B. Schiefe bestimmt. Ist der Empfangssignalstärkeverlauf (wie in Fig. 4b gezeigt) deutlich rechtsschief (Überschreiten eines positiven Schwellwertes der Schiefe), so ist davon auszugehen, dass das Kraftfahrzeug 10 wie hier dargestellt ein LKW ist und die Störquelle im Auflieger 13 oder Anhänger des Kraftfahrzeugs 10 angebracht ist, dessen Auflieger 13 oder Anhänger das Störsignal in Fahrtrichtung des Kraftfahrzeugs 10 abschattet. Für ein solches Kraftfahrzeugs 10 in Form eines LKWs muss eine Bildaufnahme um einen zeitlichen Offset ΔT_{OFF} früher erfolgt sein als im Fall der Fig. 4a mit einem PKW als Kraftfahrzeug 10, weil das frontseitige Kraftfahrzeugkennzeichen 15 bei einem solchen LKW weiter von der Störquelle 12 entfernt ist als im Falle eines eher symmetrischen Empfangssignalstärkeverlaufs, der für kleine Kraftfahrzeuge 10 wie der PKW typisch ist. Eine Empfangssignalstärkezeitverlauf-Verarbeitungseinrichtung der Signalerfassungsvorrichtung 70 korrigiert die ideale Aufnahmezeit tᵢ dann um diesen zeitlichen Offset wie folgt: tᵢ = t₅ - 2·f·Δt + ΔT_{OFF}, wobei sich der zeitliche Offset ΔT_{OFF} < 0 jeweils als fester Wert bei Feststellung der Schiefe bemisst und / oder aus der Steigung des Empfangssignalstärkeverlauf im rechtsschiefen Bereich (Tangente, Sekante, Mittelwert mehrerer Tangenten und/ oder Sekanten) abgeleitet wird. Beispielsweise kann ΔT_{OFF} = - n g·Δt sein, mit g als Skalierfaktor und n > 1 als dem Verhältnis der zeitlichen Abstände der Empfangssignalstärken bei 50% des Maximalwertes jeweils zu dem Zeitpunkt der maximalen Empfangssignalstärke.

Bei Verwendung der weiteren Bildaufnahmevorrichtung 30a, die analog dem in Fig. 4a gezeigten Ausführungsbeispiel in Fahrtrichtung des Kraftfahrzeugs 10 ausgerichtet ist, kommt ein derartiger zeitlicher Offset nicht zur Anwendung, weil die Störquelle 12 in der Nähe des rückseitigen Kraftfahrzeugkennzeichens 16 angeordnet ist. Der optimale Zeitpunkt der Bildaufnahme berechnet sich in diesem Fall nach dem in dem in Fig. 4a gezeigten Ausführungsbeispiel samt zugehöriger Beschreibung für den Fall des Kraftfahrzeugs 10 in Form eines PKWs.

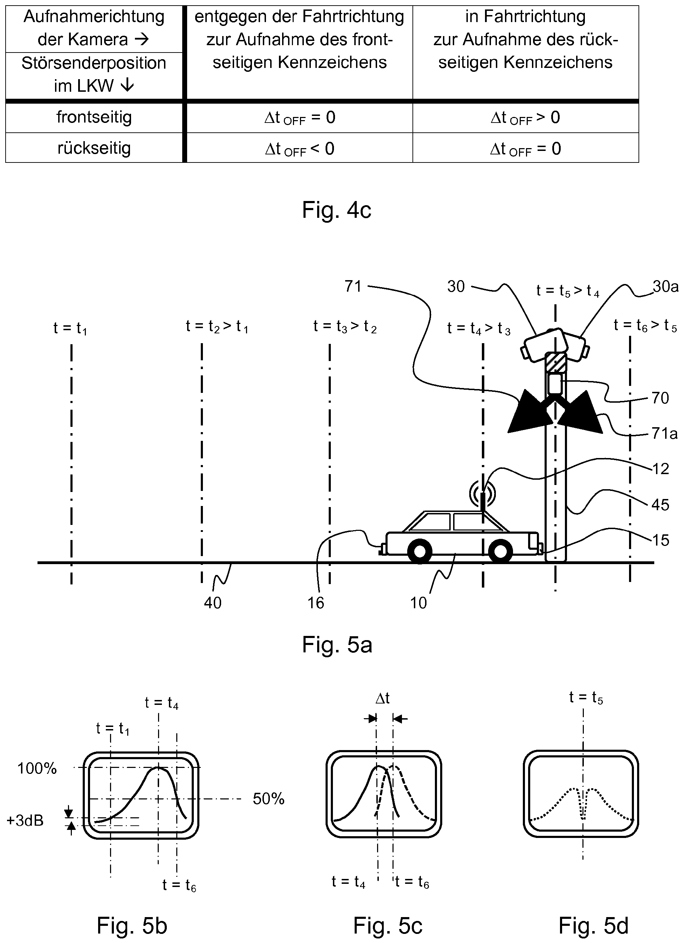

Fig. 4c zeigte eine Tabelle zu den in Fig. 4a und 4b gezeigten Ausführungsformen. Die Tabelle der Fig. 4c gibt für die verschiedenen möglichen Kombinationen aus Aufnahmerichtung der Bildaufnahmevorrichtung und Störquellenposition im LKW als Kraftfahrzeug den Bedarf nach einer zeitlichen Korrektur zur Bestimmung der optimalen Bildaufnahmezeit wieder.

Fig. 5a zeigt schematisch ein noch weiteres erfindungsgemäßes System in einer fünften Ausführungsform, und Fig. 5b bis 5d zeigen jeweils einen aufgenommenen Zeitverlauf einer Empfangssignalstärke eines Störsignals. Das System ist in der Fig. 5a in Seitenansicht gezeigt. Das System ist am Straßenrand einer Straßenoberfläche 40 angeordnet, auf der ein eine Störquelle 12 mitführendes Kraftfahrzeug 10 fährt. Es weist eine Signalerfassungsvorrichtung 70 mit zwei Empfangsantennen 71 und 71a vom Typ der Logper-Antennen, eine Bildaufnahmevorrichtung 30 und eine weitere Bildaufnahmevorrichtung 30a an einer Brücke 45 über der Straßenoberfläche 40 auf. Anstelle der gezeigten Logper-Antennen können auch andere Richtantennen, insbesondere solche mit transversaler Richtwirkung, beispielsweise eine Hohlleiter- oder Hornantenne verwendet werden. Anstelle der gezeigten Ausrichtung azimutalen Richtcharakteristik der Logper-Antennen parallel zur Fahrtrichtung kann die azimutale Richtcharakteristik der Logper-Antennen auch senkrecht zur Fahrtrichtung ausgerichtet werden. Mit beiden Maßnahmen wird die Dynamik der erfassten Empfangssignalstärkezeitverläufe erhöht, im letzteren Fall allerdings zu Ungunsten einer hohen lateralen Ortsauflösung zur möglichen Differenzierung des vom Störer befahrenen Fahrstreifens gegenüber gegebenenfalls vorhandenen benachbarten Fahrstreifen.

Die Signalerfassungsvorrichtung 70, die Bildaufnahmevorrichtung 30 und die weitere Bildaufnahmevorrichtung 30a können aber ebenfalls auf einem Stativ wie in Fig. 3a und Fig. 3b dargestellt angeordnet sein. Die in Fig. 5a gezeigte Bildaufnahmevorrichtung 30 ist ausgerichtet, Bildaufnahmen von dem Fahrstreifen (nicht gezeigt) entgegen der Fahrtrichtung des Kraftfahrzeugs 10 vor der Passage des Kraftfahrzeugs 10 an der Signalerfassungsvorrichtung 70 zu machen, während die weitere Bildaufnahmevorrichtung 30a ausgerichtet ist, Bildaufnahmen in der Fahrtrichtung des Kraftfahrzeugs 10 nach der Passage des Kraftfahrzeugs 10 an der Signalerfassungsvorrichtung 70 auf einem parallelen Fahrsteifen (nicht gezeigt) zu machen.

Die Empfangskeulen , das heißt die longitudinale Achsen (Hauptrichtungen), der Empfangsantennen 71 und 71a der Ausführungsbeispiele zu den Figuren 5a und 5b sind - anders als in den Ausführungsbeispielen zu den Figuren 4a und 4b - nicht senkrecht zur Straßenoberfläche ausgerichtet. Würden die Empfangskeulen der Empfangsantennen 71 und 71a, beispielsweise LPDA-Antennen, in Analogie zu den Ausführungsbeispielen der Figuren 3a und 3b in einer Ebene liegen, die parallel zur Straßenoberfläche 40 ausgerichtet ist, dann wäre jeweils die Empfangskeule der einen Empfangsantenne 71 30° entgegen der Fahrtrichtung des Kraftfahrzeugs 10 bezüglich der Fahrtrichtungsnormalen ausgerichtet, die parallel zur Straßenoberfläche 40 liegt, und die Empfangskeule der weiteren Empfangsantenne 71a - 30° in Fahrtrichtung des Kraftfahrzeugs 10 bezüglich der Fahrtrichtungsnormalen ausgerichtet, die parallel zur Straßenoberfläche 40 liegt. Ein Winkel von 0° bedeutet hierbei eine Ausrichtung der longitudinalen Antennenachse senkrecht zu Fahrtrichtung des Kraftfahrzeugs 10, wie in Fig. 3a, 3b, 4a und 4b gezeigt.

Im Fall der Ausführungsbeispiele zu den Figuren 5a und 5b liegen die Empfangskeulen der Empfangsantennen 71 in einer Ebene, die senkrecht zur Straßenoberfläche 40 ausgerichtet ist. Auch in diesem Fall ist die Empfangskeule einer Empfangsantenne 71 30° entgegen der Fahrtrichtung des Kraftfahrzeugs 10 bezüglich der Fahrtrichtungsnormalen ausgerichtet, die senkrecht zur Straßenoberfläche 40 liegt, und die Empfangskeule der weiteren Empfangsantenne 71 -30° in Fahrtrichtung des Kraftfahrzeugs 10 bezüglich der Fahrtrichtungsnormalen ausgerichtet, die senkrecht zur Straßenoberfläche 40 liegt (0° würde eine Ausrichtung senkrecht zu Fahrtrichtung des Kraftfahrzeugs 10 bedeuten wie in Fig. 3a, 3b, 4a und 4b gezeigt). Die Empfangsantennen 71 und 71a weisen unter Bezugnahme auf die Fig. 1a bis 1f quer zur Fahrtrichtung des Kraftfahrzeugs 10 einen winklig begrenzten Empfangsbereich (nicht gezeigt) und entsprechend räumlich einachsig ausgeprägte Richtcharakteristik auf.

Die entgegen der Fahrtrichtung des Kraftfahrzeugs 10 ausgerichtete Bildaufnahmevorrichtung 30 ist der einen Empfangsantenne 71 zugeordnet und die weitere in Fahrtrichtung des Kraftfahrzeugs 10 ausgerichtete Bildaufnahmevorrichtung 30a ist der weiteren Empfangsantenne 71a zugeordnet. Sobald die Signalerfassungsvorrichtung 70 ein Störsignal 12 des Kraftfahrzeugs 10 empfängt, welches mehr als eine Sekunde lang 3dB über dem mittleren Wert des Rauschuntergrundes liegt, überträgt sie an diejenige Bildaufnahmevorrichtung 30, 30a die Anweisung, fortan Bildaufnahmen im 10Hz-Takt zu tätigen, die derjenigen Empfangsantenne 71a zugeordnet ist, die das Störsignal 12 empfängt.

Der Empfangssignalstärkeverlauf des Störsignals 12, der von der in Fig. 5a links von der weiteren Empfangsantenne 71a angeordneten und nachstehend als linke Empfangsantenne 71 bezeichneten Empfangsantenne 71 während der Vorbeifahrt des Kraftfahrzeugs 10 empfangenen Störsignals 12 aufgenommen wird, ist ebenso unsymmetrisch wie diese Empfangsantenne 71 unsymmetrisch bezüglich der Normalen der Straßenoberfläche 40 ausgerichtet ist, nämlich linksschief, wie in Fig. 5b gezeigt ist. Der Empfangssignalstärkeverlauf des von dieser weiteren, rechten Empfangsantenne 71a während der Vorbeifahrt des Kraftfahrzeugs 10 empfangenen Störsignals ist ebenso asymmetrisch bzw. unsymmetrisch wie die rechte Empfangsantenne 71a unsymmetrisch bezüglich der Normalen der Straßenoberfläche 40 ausgerichtet ist, nämlich rechtsschief, wie anhand der gestrichelten Linie in Fig. 5c gezeigt ist. Der zeitliche Abstand t = t₆ - t₄ der Maxima der Zeitverläufe der Empfangssignalstärke von den beiden Empfangsantennen 71 ist ein Maß für die Geschwindigkeit des Kraftfahrzeugs 10, aus der der optimale Aufnahmezeitpunkt der Bildaufnahmevorrichtung 30, 30a zu berechnen ist - entweder für schon erfolgte Aufnahmen des frontseitigen Kraftfahrzeugkennzeichens einer entgegen der Fahrtrichtung ausgerichteten Bildaufnahmevorrichtung 30 und/ oder für noch zu tätigende Aufnahmen des rückwärtigen Kraftfahrzeugkennzeichens einer in Fahrtrichtung ausgerichteten weiteren Bildaufnahmevorrichtung 30a wie in den vorhergehenden Ausführungsbeispielen gemäß Fig. 3a, 3b, 4a, 4b samt zugehöriger Beschreibung beschrieben.

Der Zeitverlauf der Empfangssignalstärke des Störsignals 12, der von der in Fig. 5a rechts von der linken Empfangsantenne 71 angeordneten und nachstehend als rechte Empfangsantenne 71a bezeichneten weiteren Empfangsantenne 71a während der Vorbeifahrt des Kraftfahrzeugs 10 empfangenen Störsignals 12 aufgenommen wird, ist in Fig. 5c gestrichelt dargestellt, während der Zeitverlauf der Empfangssignalstärke des Störsignals 12, der von der linken Empfangsantenne 71 aufgenommen wird, in Fig. 5b und 5c als durchgehende Linie dargestellt ist. Der von beiden Empfangsantennen 71 kumulierte Empfangssignalstärkezeitverlauf umfasst die einander subtraktiv überlagerten Empfangssignalstärken beider Empfangsantennen 71 und 71a zum Quadrat. Ein derartiger kumulierter Empfangssignalstärkezeitverlauf weist ein lokales Minimum zur Minimumzeit t₅ und zwei auf einander gegenüberliegenden Seiten der Minimumzeit angeordnete Maxima auf, wie in Fig. 5d idealisiert gezeigt ist. Zeitlicher Ursprung für die Berechnung des optimalen Aufnahmezeitpunktes tᵢ = t₅ - f· t ist die Zeit des lokalen Minimums t₅, wobei f ein Skalierfaktor ist.

Prinzipiell ist auch ein kumulierter Empfangssignalstärkezeitverlauf möglich, der additiv überlagerte Empfangssignalstärkenzeitverläufe beider Empfangsantennen 71 umfasst. Ausgehend von gaußförmigen Empfangssignalstärkenzeitverläufen lässt sich dazu einschränkend folgendes hervorheben: Einerseits ist das dabei entstehende Maximum im Falle dessen, dass die Schnittpunkte der Zeitverläufe bei über 60% des Maximums der Zeitverläufe liegen, nur schwach ausgeprägt, wenn die Schnittpunkte der Zeitverläufe bei unter 70% des Maximums der Zeitverläufe liegen. Ebenso ist das bei additiver Überlagerung der Empfangssignalstärkenzeitverläufe entstehende Minimum im Falle, dass die Schnittpunkte der Zeitverläufe bei unter 60% des Maximums der Zeitverläufe liegen, nur schwach ausgeprägt, wenn die Schnittpunkte der Zeitverläufe bei über 40% des Maximums der Zeitverläufe liegen.

Mit anderen Worten: eine additive Empfangssignalstärkezeitverlaufskumulation ist dann geeignet, wenn die Maxima beider Empfangssignalzeitverläufe besonders unscharf oder besonders scharf von einander getrennt liegen. Im ersten Fall führt die additive Kumulation zu einem ausgeprägten lokalen Maximum im kumulierten Verlauf, im zweiten Fall zu einem ausgeprägten lokalen Minimum. Der letztere Fall lässt sich dann erreichen und ist gegenüber der subtraktiven Empfangssignalstärkezeitverlaufskumulation zu bevorzugen, wenn die Richtcharakteristik der Empfangsantennen 71 und 71a einen kleinen Öffnungswinkel in Fahrtrichtung des Kraftfahrzeugs 10 aufweist, was sich mit einer Hornantenne oder der 90° Drehung einer LPDA-Empfangsantenne um die Ausrichtungsrichtung erreichen lässt.

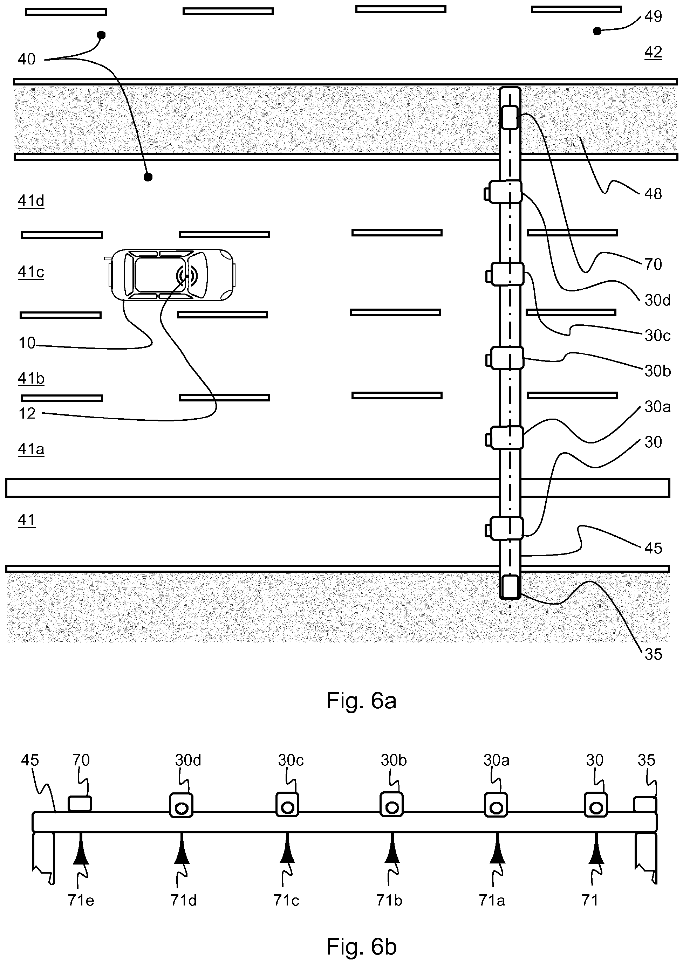

Fig. 6a und 6b zeigen schematisch ein noch weiteres erfindungsgemäßes System in einer sechsten Ausführungsform. Ein eine Störquelle 12 mitführendes Kraftfahrzeug 10 fährt auf einem Fahrstreifen 41c einer mehrstreifigen Straße mit vier Fahrstreifen 41a-d und einem Standstreifen 41, über der eine Brücke 45 angeordnet ist. Die mehrstreifige Straße weist eine von den Fahrstreifen 41a-d mittels eines Mittelstreifens 48 getrennte Gegenfahrbahn 49 auf, die nur teilweise gezeigt ist. Das System ist an der Brücke 45 angeordnet, die die Standstreifen 41 und Fahrstreifen 41a-d vollständig und den Mittelstreifen 48 teilweise überspannt. In Fig. 6a ist eine Draufsicht auf die Straßenoberfläche 40 gezeigt. An der Brücke sind eine Bildaufnahmevorrichtung 30 und vier weitere Bildaufnahmevorrichtungen 30a, 30b, 30c und 30d angeordnet, sodass jeweils eine Bildaufnahmevorrichtung 30 bis 30d je einem der Standstreifen 41 und Fahrstreifen 41a-d zugeordnet und zur Aufnahme eines auf ihr fahrenden Kraftfahrzeugs 10 mit Störquelle 12 ausgerichtet ist. Wie in Fig. 6b gezeigt, ist an der Brücke 45 über der mehrstreifigen Richtungsfahrbahn eine Signalerfassungsvorrichtung 70 angeordnet, die sechs Hornantennen als Empfangsantennen 71 bis 71e aufweist, von denen jeweils eine von fünf Hornantennen 71 bis 71d jeweils einer der fünf Bildaufnahmevorrichtungen 30 bis 30d zugeordnet ist, sodass jeweils eine Empfangsantenne 71-71d und eine Bildaufnahmevorrichtung 30-30d pro Standstreifen 41 und Fahrstreifen 41a-d in dem System vorhanden ist.

In zeitlicher Synchronisationen von den Empfangsantennen 71 bis 71d empfangene und getrennt voneinander registrierte Empfangssignalstärkezeitverläufe werden bezüglich ihres Zeitverlaufes der Empfangssignalstärke ausgewertet, um den Standstreifen 41 oder Fahrstreifen 41c des die Störquelle 12 mitführenden Kraftfahrzeugs 10 zu bestimmen und diejenige Bildaufnahmevorrichtung 30c, wie in Bezug auf Fig. 3a, 3b, 4a, 4b beschrieben, auszulösen oder von derjenigen Bildaufnahmevorrichtung 30c, wie in Bezug auf Fig. 3a, 3b, 4a, 4b beschrieben, eine Bildaufnahme auszuwählen, die dem bestimmten Fahrstreifen 41c zugeordnet ist.

Da auf der nicht von der Brücke überspannten angrenzenden Richtungsfahrbahn des Gegenverkehrs d.h. Gegenfahrbahn 49, die in Fig. 6a teilweise gezeigt ist, sich ebenfalls ein eine Störquelle mitführendes Kraftfahrzeug (nicht gezeigt) bewegen kann, ist es vorteilhaft, auch für die dem Mittelstreifen 48 gegenüberliegenden Fahrstreifen 42 mit der zugeordneten Empfangsantenne 71e eine Referenz bereitzustellen, mit deren Hilfe Störsignale, die auf der Gegenfahrbahn 49 auftreten, von Störsignalen, die auf dem diesseits des Mittelstreifens 48 liegenden Fahrstreifen 41d auftreten, zu unterscheiden sind. Eine solche Referenz ist mit einer sechsten Hornantenne als Empfangsantenne 71e bereitgestellt, die am der Gegenfahrbahn 49 zugewandten Ende der Brücke über dem Mittelstreifen 48 angeordnet ist, wie in Fig. 6b gezeigt.

Die Empfangsantennen 71 bis 71e weisen sowohl quer zur als auch längs der Fahrtrichtung des Kraftfahrzeugs 10 eine winklig begrenzte Öffnung (nicht gezeigt) und entsprechend räumlich zweiachsig ausgeprägte Richtcharakteristik auf.

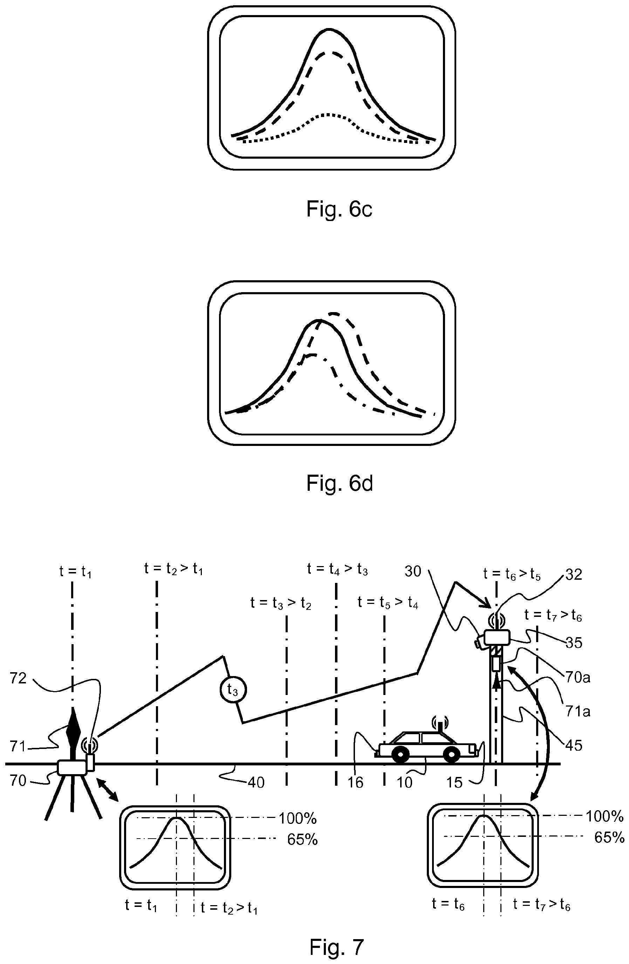

Fig. 6c und 6d zeigen schematisch jeweils aufgenommene Zeitverläufe einer Empfangssignalstärke eines Störsignals. Mit Bezug auf Fig. 6c empfangen im Zuge der Passage des die Störquelle 12 mitführenden Kraftfahrzeugs 10 auf dem dritten Fahrstreifen 41c, auf dem das Kraftfahrzeug 10 fährt, unter der Brücke die Empfangsantenne 71c des dritten Fahrstreifens 41c, deren Zeitverlauf als durchgezogene Linie dargestellt ist, die nächstbenachbarten Empfangsantennen 71d und 71b des vierten und zweiten Fahrstreifens 41d und 41b, deren Zeitverlauf als gestrichelte Linie dargestellt ist, und die übernächst benachbarten Empfangsantennen 71a und 71e des ersten Fahrstreifens 41a und des Mittelstreifens 48, deren Zeitverlauf als gepunktete Linie dargestellt ist, das Störsignal mit unterschiedlicher Empfangssignalstärke. Alle Bildaufnahmevorrichtungen 30, 30a nehmen im 10Hz-Takt Bilder von der Straße entgegen der Fahrtrichtung des Kraftfahrzeugs 10 auf. Es wird durch eine die Empfangssignalstärkeverlaufs-Verarbeitungseinrichtung umfassende Kontrolleinrichtung 35 die optimale Aufnahmezeit aus dem stärksten Empfangssignal d.h. desjenigen der Empfangsantenne 71c des dritten Fahrstreifens 41c, wie in Bezug auf Fig. 4a beschrieben, ermittelt und die der optimalen Aufnahmezeit hinsichtlich ihrer Aufnahmezeit zeitlich nächstgelegene Bildaufnahme derjenigen Bildaufnahmevorrichtung 30c ausgewählt, die derjenigen Empfangsantenne 71c zugeordnet ist, die das stärkste Empfangssignal aufweist, nämlich die des dritten Fahrstreifens 41c.

Ferner weist die Kontrolleinrichtung 35 eine Bildverarbeitungseinrichtung (nicht dargestellt) auf, mit der die Kontrolleinrichtung 35 das Kraftfahrzeugkennzeichen des Kraftfahrzeugs 10 in Textform mittels einer Zeichenerkennungsroutine (OCR-Routine) aus den Bilddaten der ausgewählten Bildaufnahme gewinnt. Die Kontrolleinrichtung 35 verfügt über ein Kommunikationsmittel zum Versand der Daten des Kraftfahrzeugkennzeichens des Kraftfahrzeugs 10 zusammen mit einem Hinweis auf eine von dem Kraftfahrzeug 10 mitgeführte Störquelle 12 an eine Zentrale (nicht dargestellt).

In Fig. 6d sind Zeitverläufe von Empfangssignalstärken eines Störsignals bei einem Wechsel eines Fahrstreifens während der Fahrt des Kraftfahrzeugs 10 gezeigt. Fig. 6d zeigt die Zeitverläufe der über die Hornantennen 71b (gestrichelt), 71c (durchgezogen) und 71d (strichgepunktet) erfassten Empfangssignalstärken für einen Wechsel vom dritten Fahrstreifen 41c auf den zweiten Fahrstreifen 41b durch das Kraftfahrzeug 10 bei der Passage der Brücke 45. Überschneiden sich die Empfangssignalstärkezeitverläufe zweier oder mehr benachbarter Empfangsantennen 71b und 71c aufgrund des Fahrstreifenwechsels, wie in Fig. 6d gezeigt ist, so können die Bildaufnahmen der beiden oder noch mehr Bildaufnahmevorrichtungen 30b und 30c ausgewählt werden, deren Fahrstreifen 41b und 41c das Kraftfahrzeug 10 vor der Passage der Brücke 45 befahren hat.

Fig. 7 zeigt schematisch ein noch weiteres erfindungsgemäßes System in einer siebten Ausführungsform und Zeitverläufe einer Empfangssignalstärke eines Störsignals. Das System ist in Seitenansicht gezeigt. Das System ist am Straßenrand einer Straßenoberfläche 40 angeordnet, auf der ein eine Störquelle 12 mitführendes Kraftfahrzeug 10 fährt. Es weist eine Signalerfassungsvorrichtung 70 mit einer Empfangsantenne 71 auf, beispielsweise eine LPDA-Antenne, die entgegen der Fahrtrichtung des Kraftfahrzeugs 10 etwa 200 m entfernt von einer Brücke 45 straßenseitig am Straßenrand angeordnet ist. Eine weitere Signalerfassungsvorrichtung 70a mit einer weiteren Empfangsantenne 71a, in diesem Falle einer Hornantenne, und eine Bildaufnahmevorrichtung 30 sind an der Brücke 45 straßenseitig über der Straßenoberfläche 40 angeordnet.

Die Empfangsantenne 71 der Signalerfassungsvorrichtung 70 ist mit ihrer Empfangskeule parallel zur Straßenoberfläche 40 und senkrecht zur Fahrtrichtung des Kraftfahrzeugs 10 ausgerichtet, und die weitere Empfangsantenne 71a der weiteren Signalerfassungsvorrichtung 70a ist mit ihrer Empfangskeule senkrecht zur Straßenoberfläche 40 ausgerichtet. Eine Empfangssignalstärkezeitverlauf-Verarbeitungseinrichtung (nicht gezeigt) der Signalerfassungsvorrichtung 70 ermittelt aus dem Empfangssignalstärkezeitverlauf des mit der ihr zugehörigen Empfangsantenne 71 aufgenommenen Störsignals einen Startzeitpunkt t₃ für einen Beginn mehrerer Bildaufnahmen in Folge, der an eine Kontrolleinrichtung 35 der Brücke 45, die die Bildaufnahmevorrichtung 30 zur Aufnahme von Bildern entgegen der Fahrtrichtung des Kraftfahrzeugs umfasst, übermittelt wird. Die Kontrolleinrichtung 35 weist eine Kamerafunkvorrichtung 32 auf, während die Signalerfassungsvorrichtung 70 eine Funkvorrichtung 72 aufweist, die zum Übermitteln von Daten an die Kamerafunkvorrichtung 32 ausgebildet ist. Bei der Passage des Kraftfahrzeugs 10 an der Signalerfassungsvorrichtung 70 ist die aufgenommene Empfangssignalstärke maximal und sinkt dann bei t=t₂ auf 65% und anschließend weiter ab.

Bei Erreichen dieses Startzeitpunktes t₃ weist die Kontrolleinrichtung 35 die Bildaufnahmevorrichtung 30 an, mit 10 Hz solange wiederholt Bilder aufzunehmen, bis eine anders lautende Anweisung zur Einstellung der seriellen Bildaufnahme erteilt wird. Aus dem Empfangssignalstärkezeitverlauf der weiteren Signalerfassungsvorrichtung 70a wird durch eine Empfangssignalstärkezeitverlauf-Verarbeitungseinrichtung (nicht gezeigt) der Kontrolleinrichtung 35 der Optimalzeitpunkt der Bildaufnahme ermittelt und eine dem Optimalzeitpunkt nächst gelegen aufgenommene Bildaufnahme der Serie von Bildaufnahmen ausgewählt. Aus dieser ausgewählten Bildaufnahme ermittelt eine Bildverarbeitungseinrichtung (nicht gezeigt) der Kontrolleinrichtung35 mittels Zeichenerkennung ein Kraftfahrzeugkennzeichen, welches zusammen mit einer Nachricht über die Detektion des Störsignals 12 an eine Zentrale (nicht gezeigt) übermittelt wird. In Antwort auf die Feststellung der Kontrolleinrichtung 35, dass die Daten des Empfangssignalstärkezeitverlaufs ausreichend sind, um den Optimalzeitpunkt zu bestimmen, erteilt die Kontrolleinrichtung 35 der Bildaufnahmevorrichtung 30 die Anweisung, keine weiteren Bilder aufzunehmen.

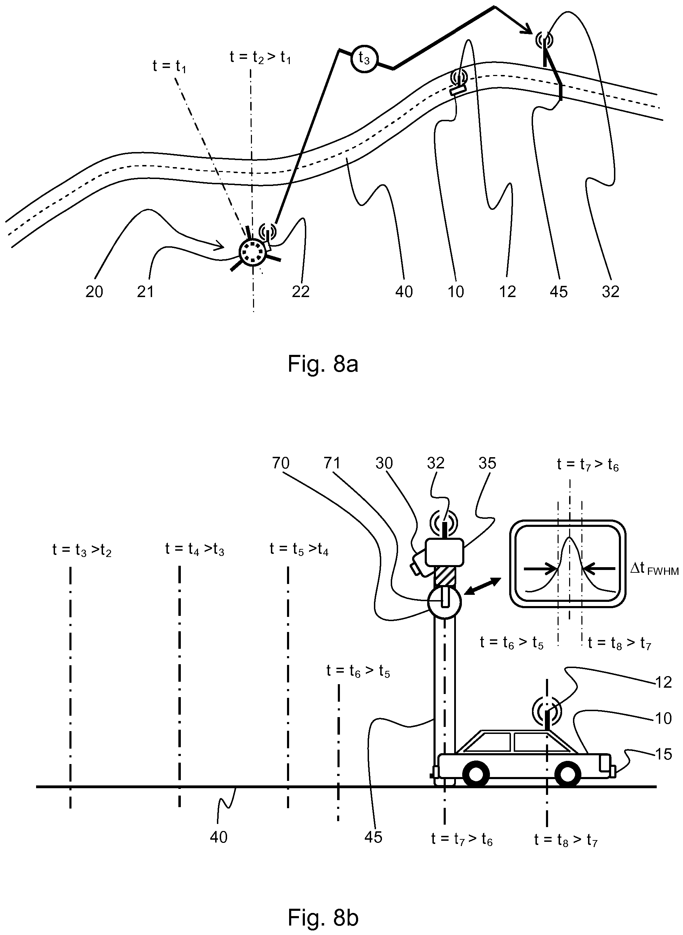

Fig. 8a und 8b zeigen schematisch ein noch weiteres erfindungsgemäßes System in einer achten Ausführungsform, wobei Fig. 8b zusätzlich einen Zeitverlauf einer Empfangssignalstärke eines Störsignals zeigt. Ein eine Störquelle 12 mitführendes Kraftfahrzeug 10 fährt auf einer Straßenoberfläche 40 einer Straße. Diese Situation ist in Fig. 8a in Draufsicht und in Fig. 8b in Seitenansicht gezeigt. Das System weist eine portable Signalpeilvorrichtung 20 mit einer Peilantenne 21 und einer Peilerfunkvorrichtung 22, eine an einer die Straße überspannenden Brücke 45 angeordnete Signalerfassungsvorrichtung 70 und eine an der Brücke 45 angeordnete Bildaufnahmevorrichtung 30 mit einer Kamerafunkvorrichtung 32 auf.

Mittels der Signalpeilvorrichtung 20, beispielsweise eines Doppler-Peilers, wird ein Störsignal der Störquelle 12 erfasst und mindestens ein Peilwinkel der Störquelle 12 ermittelt und anhand des ermitteln Peilwinkels ein Bildreihenaufnahme-Startzeitpunkt t₃ bestimmt, der an die Bildaufnahmevorrichtung 30 übermittelt wird. Die Bildaufnahmevorrichtung 30 wird in Abhängigkeit von dem Bildreihenaufnahme-Startzeitpunkt t₃ ausgelöst, die Reihe mehrerer Bildaufnahmen zu erzeugen.

Die Signalerfassungsvorrichtung 70 erfasst ebenfalls das Störsignal der Störquelle 12 und nimmt Zeitverläufe einer Empfangssignalstärke des Störsignals auf, von denen einer in Fig. 8b gezeigt ist. Die Signalerfassungsvorrichtung 70 bestimmt, anhand des aufgenommenen Zeitverlaufs der Empfangssignalstärke des Störsignals, einen Optimalzeitpunkt, an dem das Kraftfahrzeug 10, das die Störquelle 12 mit sich führt, in Relation zu der Bildaufnahmevorrichtung 30 eine Position einnimmt, die das Identifizieren des Kraftfahrzeugs 10 anhand einer am Optimalzeitpunkt erzeugten Bildaufnahme der Bildaufnahmevorrichtung 30 von dem Kraftfahrzeug 10 ermöglicht, mittels einer Empfangssignalstärkezeitverlauf-Verarbeitungseinrichtung (nicht gezeigt) und wählt das am Optimalzeitpunkt erzeugte Bild aus.

Die stärkste Empfangssignalstärke des Störsignals empfängt die Signalerfassungsvorrichtung 70, wenn das Kraftfahrzeug 10 unter der Brücke 45 durchfährt. Nach diesem Maximum sinkt die Empfangssignalstärke, und die Signalerfassungsvorrichtung 70 kann die Bildaufnahmevorrichtung 30 beispielsweise mit dem Enden der Dauer der Halbwertsbreite Δt_{FWHM} zum Zeitpunkt t=t₈ anweisen, das Aufnehmen von Bildern zu beenden. In einer alternativen Variante kann die Signalerfassungsvorrichtung 70 die Bildaufnahmevorrichtung 30 unabhängig von dem Zeitverlauf der Empfangssignalstärke anweisen, das Aufnehmen von Bildern zu beenden, wenn die Dauer eines durch die Signalpeilvorrichtung bestimmten Optimalzeitbereiches, dessen Beginn durch den Bildreihenaufnahme-Startzeitpunkt t₃ definiert ist, abgelaufen ist. Die Signalerfassungsvorrichtung 70 kann die Bildaufnahmevorrichtung 30 anweisen, die am Optimalzeitpunkt erzeugte Bildaufnahme an eine Zentrale (nicht gezeigt) weiterzuleiten.

Generell können die Empfangssignalstärkezeitverläufe mehrerer Signalerfassungsvorrichtungen, die unterschiedliche Typen von Antennen, insbesondere Richtantennen, aufweisen und bezüglich der Fahrbahn an verschiedenen Orten (neben der Straße, über der Straße) in verschiedenen Ausrichtungen (beispielweise senkrecht zur Fahrtrichtung parallel oder senkrecht zur Fahrbahnoberfläche) angeordnet sind, durch eine Empfangssignalstärkezeitverlauf-Verarbeitungseinrichtung gemeinsam zur Bestimmung des Optimalzeitpunktes oder Optimalzeitbereiches verarbeitet werden. In diesem Sinne können die genannten Ausführungsbeispiele auch kombiniert werden, wobei es für das Funktionieren der Erfindung nicht auf einen bestimmten Typ von Empfangsantenne oder Richtantenne ankommt.

### Bezugszeichenliste:

- 10: Kraftfahrzeug
- 11: Fahrerhaus
- 12: Störquelle
- 13: Auflieger
- 15: frontseitiges Kraftfahrzeugkennzeichen
- 16: rückseitiges Kraftfahrzeugkennzeichen
- 20: Signalpeilvorrichtung
- 21: Peilantenne
- 22: Peilerfunkvorrichtung
- 30: Bildaufnahmevorrichtung
- 30a-d: weitere Bildaufnahmevorrichtung(en)
- 32: Kamerafunkvorrichtung
- 35: Kontrolleinrichtung
- 40: Straßenoberfläche
- 41: Standstreifen
- 41a-d: Fahrstreifen
- 42: Fahrstreifen der Gegenfahrbahn 49
- 43: Zielpunkt
- 45: Brücke
- 48: Mittelstreifen
- 49: Gegenfahrbahn
- 70: Signalerfassungsvorrichtung
- 70a: weitere Signalerfassungsvorrichtung
- 71: Empfangsantenne
- 71a-f: weitere Empfangsantenne(n)
- 72: Funkvorrichtung der Signalerfassungsvorrichtung 70
- 73: Dipolantenne
- 76: verbindende Leitung
- 77: Hauptstrahlungskeule
- 78: Nebenstrahlungskeule
- 80: Stativ

## Patentansprüche

1. Verfahren zum bildlichen Erfassen eines Kraftfahrzeugs (10), das eine Störquelle (12) mit sich führt, die geeignet ist, die bestimmungsgemäße Funktion eines Funksignalempfängers zu beeinträchtigen, mittels wenigstens einer straßenseitig angeordneten Signalerfassungsvorrichtung (70) und wenigstens einer Bildaufnahmevorrichtung (30), umfassend die folgenden Schritte:
- Erfassen wenigstens eines Störsignals der Störquelle (12) und Aufnehmen wenigstens eines Zeitverlaufs einer Empfangssignalstärke des Störsignals mittels der Signalerfassungsvorrichtung (70);
- Bestimmen, anhand des aufgenommenen Zeitverlaufs der Empfangssignalstärke, wenigstens eines Optimalzeitpunktes oder wenigstens eines Optimalzeitbereiches, an dem das Kraftfahrzeug (10), das die Störquelle (12) mit sich führt, in Relation zu der Bildaufnahmevorrichtung (30) eine Position einnimmt, welche das Identifizieren des Kraftfahrzeugs (10) anhand wenigstens einer am Optimalzeitpunkt oder innerhalb des Optimalzeitbereiches erzeugten Bildaufnahme der Bildaufnahmevorrichtung (30) von dem Kraftfahrzeug (10) ermöglicht, mittels einer Empfangssignalstärkezeitverlauf-Verarbeitungseinrichtung;
- Erzeugen wenigstens einer Bildaufnahme von dem Kraftfahrzeug (10) oder von einem Kraftfahrzeugbereich des Kraftfahrzeugs (10) zu dem Optimalzeitpunkt oder innerhalb des Optimalzeitbereiches mittels der Bildaufnahmevorrichtung (30).

2. Verfahren nach Anspruch 1, **dadurch gekennzeichnet, dass** zu dem Optimalzeitpunkt oder während des Optimalzeitbereiches ein Bildauslösesignal an die Bildaufnahmevorrichtung (30) übertragen wird, und das Erzeugen der Bildaufnahme von dem Kraftfahrzeug (10) oder von dem Kraftfahrzeugbereich des Kraftfahrzeugs (10) zu dem Optimalzeitpunkt oder innerhalb des Optimalzeitbereiches in Folge des Empfangs des Bildauslösesignals in der Bildaufnahmevorrichtung (30) ausgelöst wird.

3. Verfahren nach Anspruch 1, **dadurch gekennzeichnet, dass** der Optimalzeitpunkt oder der Optimalzeitbereich an die Bildaufnahmevorrichtung (30) mitgeteilt wird, wobei die Bildaufnahmevorrichtung (30) infolge dessen die Bildaufnahme von dem Kraftfahrzeug (10) oder von dem Kraftfahrzeugbereich des Kraftfahrzeugs (10) zu dem Optimalzeitpunkt oder innerhalb des Optimalzeitbereiches erzeugt.

4. Verfahren nach Anspruch 1, **dadurch gekennzeichnet, dass** mittels der Bildaufnahmevorrichtung (30) eine Reihe von mehreren Bildaufnahmen erzeugt wird, und die Empfangssignalstärkezeitverlauf-Verarbeitungseinrichtung oder eine Bildverarbeitungseinrichtung aus der Reihe von mehreren Bildaufnahmen wenigstens eine Bildaufnahme auswählt, die zu dem Optimalzeitpunkt oder innerhalb des Optimalzeitbereiches erzeugt wurde.

5. Verfahren nach Anspruch 4, **dadurch gekennzeichnet, dass** mittels einer Signalpeilvorrichtung (20) das Störsignal der Störquelle (12) erfasst und mindestens ein Peilwinkel der Störquelle (12) ermittelt wird, anhand des ermitteln Peilwinkels mittels einer Peilwinkel-Verarbeitungseinrichtung ein Bildreihenaufnahme-Startzeitpunkt bestimmt wird, der bestimmte Bildreihenaufnahme-Startzeitpunkt an die Bildaufnahmevorrichtung (30) übermittelt wird und die Bildaufnahmevorrichtung (30) in Abhängigkeit von dem Bildreihenaufnahme-Startzeitpunkt ausgelöst wird, die Reihe mehrerer Bildaufnahmen zu erzeugen.

6. Verfahren nach einem der vorangehenden Ansprüche, **dadurch gekennzeichnet, dass** die Empfangssignalstärkezeitverlauf-Verarbeitungseinrichtung im aufgenommenen Zeitverlauf der Empfangssignalstärke wenigstens einen Maximalwert der Empfangssignalstärke ermittelt und anhand des ermittelten Maximalwertes den Optimalzeitpunkt oder den Optimalzeitbereich bestimmt.

7. Verfahren nach Anspruch 6, **dadurch gekennzeichnet, dass** der Optimalzeitpunkt oder der Optimalzeitbereich mittels der Empfangssignalstärkezeitverlauf-Verarbeitungseinrichtung als der Zeitpunkt oder Zeitbereich bestimmt wird, an dem oder während dessen die Empfangssignalstärke einen vorbestimmten relativen Schwellwert in Bezug auf den Maximalwert unterschreitet oder überschreitet oder innerhalb eines vorbestimmten relativen Wertebereiches in Bezug auf den Maximalwert liegt.

8. Verfahren nach Anspruch 6, **dadurch gekennzeichnet, dass** mittels der Empfangssignalstärkezeitverlauf-Verarbeitungseinrichtung aus dem aufgenommenen Zeitverlauf und dem ermittelten Maximalwert der Empfangssignalstärke ein Maximalwert-Zeitpunkt und/ oder wenigstens eine Zeitverlaufsbreite ermittelt werden und der Optimalzeitpunkt oder der Optimalzeitbereich mittels einer Extrapolation oder Interpolation aus dem Maximalwert-Zeitpunkt und/ oder der Zeitverlaufsbreite bestimmt wird.

9. Verfahren nach Anspruch 8, **dadurch gekennzeichnet, dass** mittels der Empfangssignalstärkezeitverlauf-Verarbeitungseinrichtung ein Straßenverlauf einer Straße, auf dem sich das Kraftfahrzeug bewegt, in die Extrapolation oder die Interpolation einbezogen wird.

10. Verfahren nach einem der vorangehenden Ansprüche, **dadurch gekennzeichnet, dass** durch mehrere räumlich voneinander beabstandete Empfangsantennen (71, 71a) der Signalerfassungsvorrichtung (70) im Wesentlichen zeitgleich jeweils ein Störsignal derselben Störquelle (12) empfangen und durch die Signalerfassungsvorrichtung (70) mehrere den jeweiligen Empfangsantennen zugeordnete Zeitverläufe von Empfangssignalstärken der Störsignale aufgenommen werden, wobei von mehreren Bildaufnahmevorrichtungen (30, 30a) einer Kontrolleinrichtung (75) jene Bildaufnahmevorrichtung (30) zum Erzeugen der Bildaufnahme oder zum Bereitstellen der erzeugten Bildaufnahme durch die Kontrolleinrichtung (75) ausgewählt wird, die mit derjenigen Empfangsantenne (71) assoziiert ist, die gegenüber allen anderen Empfangsantennen (71a), die Störsignale empfangen und der Signalerfassungsvorrichtung (70) bereitstellen, der Signalerfassungsvorrichtung (70) das Störsignal mit der höchsten Empfangssignalstärke bereitgestellt hat.

11. Verfahren nach einem der vorangehenden Ansprüche, **dadurch gekennzeichnet, dass** die zu dem Optimalzeitpunkt oder innerhalb des Optimalzeitbereiches erzeugte Bildaufnahme und/ oder ein aus der Bildaufnahme gewonnenes zur Identifikation des Kraftfahrzeugs taugliches Kraftfahrzeugkennzeichen zusammen mit einer Information über den Ort der Störsignalerfassung an einen Zentralrechner übertragen wird.

12. Verfahren nach einem der vorangehenden Ansprüche, **dadurch gekennzeichnet, dass** mittels der Empfangssignalstärkezeitverlauf-Verarbeitungseinrichtung eine Asymmetrie des aufgenommenen Zeitverlaufs der Empfangssignalstärke ermittelt wird und diese Asymmetrie von der Empfangssignalstärkezeitverlauf-Verarbeitungseinrichtung bei der Bestimmung des Optimalzeitpunktes oder des Optimalzeitbereiches mit berücksichtigt wird.

13. System zum bildlichen Erfassen eines Kraftfahrzeugs (10), das eine Störquelle (12) mit sich führt, die geeignet ist, die bestimmungsgemäße Funktion eines Funksignalempfängers zu beeinträchtigen, aufweisend:
- eine straßenseitig angeordnete Signalerfassungsvorrichtung (70), welche ausgebildet ist, ein Störsignal der Störquelle (12) zu erfassen und einen Zeitverlauf einer Empfangssignalstärke des Störsignals aufzunehmen,
- eine Bildaufnahmevorrichtung (30) zur Erzeugung von Bildaufnahmen von Kraftfahrzeugen oder von Kraftfahrzeugbereichen und
- eine Empfangssignalstärkezeitverlauf-Verarbeitungseinrichtung, welche ausgebildet ist, anhand des aufgenommenen Zeitverlaufs der Empfangssignalstärke, einen Optimalzeitpunkt oder einen Optimalzeitbereich zu bestimmen, an dem das Kraftfahrzeug (10), welches die Störquelle (12) mit sich führt, in Relation zu der Bildaufnahmevorrichtung (30) eine Position einnimmt, welche das Identifizieren des Kraftfahrzeugs (10) anhand einer am Optimalzeitpunkt oder innerhalb des Optimalzeitbereiches erzeugten Bildaufnahme der Bildaufnahmevorrichtung (30) von dem Kraftfahrzeug (10) ermöglicht.

14. System nach Anspruch 13, **dadurch gekennzeichnet, dass** die Bildaufnahmevorrichtung (30) ausgebildet ist, auf Anforderung von der Empfangssignalstärkezeitverlauf-Verarbeitungseinrichtung zum Optimalzeitpunkt oder innerhalb des Optimalzeitbereiches eine Bildaufnahme von dem Kraftfahrzeug (10) zu erzeugen und/ oder eine zum Optimalzeitpunkt oder innerhalb des Optimalzeitbereiches erzeugte Bildaufnahme des Kraftfahrzeugs (10) zur Identifizierung des Kraftfahrzeugs (10) bereitzustellen.

15. System nach Anspruch 13 oder 14, **dadurch gekennzeichnet, dass** die Signalerfassungsvorrichtung (70) wenigstens eine Richtantenne (71), insbesondere eine Yagi-Uda-Antenne, eine Logarithmisch-Periodische-Dipol-Antenne (LPDA-Antenne), eine Parabolantenne, eine Hohlleiterantenne oder eine Hornantenne, aufweist.

16. System nach einem der Ansprüche 13 bis 15, **gekennzeichnet durch**:
- eine Signalpeilvorrichtung (20), welche ausgebildet ist, das Störsignal der Störquelle (12) zu erfassen und mindestens einen Peilwinkel der Störquelle (12) zu ermitteln, und
- eine Peilwinkel-Verarbeitungseinrichtung, welche ausgebildet ist, anhand des ermitteln Peilwinkels einen Bildreihenaufnahme-Startzeitpunkt zu bestimmen und den bestimmten Bildreihenaufnahme-Startzeitpunkt an die Bildaufnahmevorrichtung (30) zu übermitteln,
wobei
- die Bildaufnahmevorrichtung (30) ausgebildet ist, in Abhängigkeit von dem Bildreihenaufnahme-Startzeitpunkt eine Reihe von mehreren Bildaufnahmen zu erzeugen, und
- die Empfangssignalstärkezeitverlauf-Verarbeitungseinrichtung oder eine Bildverarbeitungseinrichtung ausgebildet ist, aus der Reihe der mehreren Bildaufnahmen wenigstens eine Bildaufnahme auszuwählen, die zu dem Optimalzeitpunkt oder innerhalb des Optimalzeitbereiches erzeugt wurde.

## Claims

1. A method for the visual detection of a motor vehicle (10), which carries with it a source of interference (12) which is capable of impairing the intended function of a radio signal receiver, by means of at least one signal detection device (70) arranged roadside and at least one image acquisition device (30), comprising the following steps:
- detecting at least one interference signal of the interference source (12) and recording at least one time course of a receive signal strength of the interference signal by means of the signal detection device (70);
- determining, on the basis of the recorded time course of the reception signal strength, at least one optimum time or at least an optimum time range at which the motor vehicle (10) which carries the interference source (12) occupies in relation to the image acquisition device (30) a position which enables the identification of the motor vehicle (10) by means of at least one motor vehicle (10) image acquisition of the image acquisition device (30) generated at the optimum time or during the optimum time range by means of a receive signal strength time course processing device;
- producing at least one image acquisition of the motor vehicle (10) or of a motor vehicle area of the motor vehicle (10) at the optimum time or during the optimum time range by means of the image acquisition device (30).

2. The method according to claim 1, **characterized in that** at the optimum time or during the optimum time range an image trigger signal is transmitted to the image acquisition device (30), and the generating of the image acquisition of the motor vehicle (10) or from the motor vehicle area of the motor vehicle (10) at the optimum time or during the optimum time range is triggered as a result of receiving the image trigger signal in the image acquisition device (30).

3. The method according to claim 1, **characterized in that** the optimum time or the optimum time range is communicated to the image acquisition device (30), wherein as a result of which the image acquisition device (30) generates the image acquisition of the motor vehicle (10) or of the motor vehicle area of the motor vehicle (10) at the optimum time or during the optimum time range.

4. The method according to claim 1, **characterized in that** by means of the image acquisition device (30) a series of several image acquisitions is generated, and the receive signal strength time course processing device or an image processing device selects from the series of several image acquisitions at least one image acquisition which was created at the optimum time or during the optimum time range.

5. The method according to claim 4, **characterized in that** the interference signal of the interference source (12) is detected by means of a signal bearing device (20) and at least one bearing angle of the interference source (12) is determined, an image series acquisition start time is identified on the basis of the determined bearing angle by means of a bearing angle processing device, the identified image series acquisition start time is transmitted to the image acquisition device (30) and the image acquisition device (30) is triggered depending on the image series acquisition start time to generate the series of several image acquisitions.

6. The method according to one of the preceding claims, **characterized in that** the receive signal strength time course processing device determines in the recorded time course of the receive signal strength at least a maximum value of the receive signal strength and identifies the optimum time or the optimum time range based on the maximum value determined.

7. The method according to claim 6, **characterized in that** the optimum time or the optimum time range is identified by means of the receive signal strength time course processing device as the time or time range at which or during which the receive signal strength falls below or exceeds a predetermined relative threshold in relation to the maximum value or is within a predetermined relative value range in relation to the maximum value.

8. The method according to claim 6, **characterized in that** by means of the receive signal strength time course processing device a maximum value time and / or at least a time course width are determined from the recorded time course and the determined maximum value of the receive signal strength and the optimum time or the optimum time range is identified by means of an extrapolation or interpolation from the maximum value time and / or the time course width.

9. The method according to claim 8, **characterized in that** by means of the receive signal strength time course processing device a road course of a road on which the motor vehicle moves is included in the extrapolation or the interpolation.

10. The method according to one of the preceding claims, **characterized in that** by several spatially spaced receiving antennas (71, 71a) of the signal detection device (70) an interference signal of the same interference source (12) is received substantially simultaneously and by the signal detection device (70) several time courses of the receive signal strengths of the interference signals assigned to the respective receiving antennas are recorded, wherein from several image acquisition devices (30, 30a) of a control device (75) that image acquisition device (30) which is associated with that receiving antenna (71) which has provided compared to all other receiving antennas (71a), which receive interference signals and provide them for the signal detection device (70), to the signal detection device (70) the interference signal with the highest receive signal strength is selected to generate the image acquisition or to provide the generated image acquisition by the control device (75).

11. The method according to one of the preceding claims, **characterized in that** the image acquisition generated at the optimum time or during the optimum time range and / or a vehicle registration number plate obtained from the image acquisition and suitable for the identification of the vehicle is transmitted to a central computer together with information about the place of interference signal detection.

12. The method according to one of the preceding claims, **characterized in that** by means of the receive signal strength time course processing device an asymmetry of the recorded time course of the receive signal strength is determined and this asymmetry is taken into account by the receive signal strength time course processing device when determining the optimum time or the optimum time range.

13. A system for the visual detection of a motor vehicle (10) which carries with it an interference source (12) capable of impairing the intended function of a radio signal receiver, having:
- a road-side-arranged signal detection device (70), which is designed to detect an interference signal of the interference source (12) and to record a time course of a receive signal strength of the interference signal,
- an image acquisition device (30) for generating image acquisitions of motor vehicles or motor vehicle areas, and
- a receive signal strength time course processing device, which is designed to identify on the basis of the recorded time course of the receive signal strength, an optimum time or an optimum time range at which the motor vehicle (10), which carries the interference source (12), occupies a position in relation to the image acquisition device (30) which enables the identification of the motor vehicle (10) on the basis of a motor vehicle (10) image acquisition of the image acquisition device (30) generated at the optimum time or during the optimum time range.

14. The system according to claim 13, **characterized in that** the image acquisition device (30) is designed to generate on request from the receive signal strength time course processing device at the optimum time or during the optimum time range an image acquisition of the motor vehicle (10) and / or to provide an image acquisition of the vehicle (10) generated at the optimum time or during the optimum time range for identification of the motor vehicle (10).

15. The system according to claim 13 or 14, **characterized in that** the signal detection device (70) has at least one directional antenna (71), in particular a Yagi-Uda antenna, a logarithmic periodic dipole antenna (LPDA antenna), a parabolic antenna, a hollow conductor antenna or a horn antenna.

16. The system according to any one of claims 13 to 15, **characterized by**:
- a signal bearing device (20), which is designed to detect the interference signal of the interference source (12) and to identify at least one bearing angle of the interference source (12), and
- a bearing angle processing device, which is designed to determine an image series acquisition start time on the basis of the determined bearing angle and to transmit the determined image series acquisition start time to the image acquisition device (30),
wherein
- the image acquisition device (30) is designed to generate a series of several image acquisitions depending on the image series acquisition start time, and
- the receive signal strength time course processing device or an image processing device is designed to select from the series of the several image acquisitions at least one image acquisition that is generated at the optimum time or during the optimum time range.

## Revendications

1. Un procédé de détection d'image d'un véhicule à moteur (10) portant une source d'interférence (12) capable de nuire à la fonction prévue d'un récepteur de signal radio au moyen d'au moins un dispositif de détection de signal (70) situé au côté d'une rue et d'au moins un dispositif capteur d'image (30) comprenant les étapes suivantes :
- détecter au moins un signal d'interférence de la source d'interférence (12) et enregistrer au moins une courbe temporelle d'une intensité du signal récepteur du signal d'interférence au moyen du dispositif de détection de signal (70) ;
- déterminer, sur la base de la courbe temporelle enregistrée de l'intensité du signal récepteur, au moins un moment optimal ou au moins un intervalle de temps optimal auquel le véhicule à moteur (10) portant la source d'interférence (12) prend par rapport au dispositif capteur d'image (30) une position qui permet l'identification du véhicule à moteur (10) sur la base d'au moins une capture d'image du dispositif capteur d'image (30) du véhicule à moteur (10) générée au moment optimal ou pendant l'intervalle de temps optimal au moyen d'un dispositif de traitement de la courbe temporelle d'intensité du signal récepteur ;
- générer au moins une capture d'image du véhicule à moteur (10) ou d'une zone de véhicule à moteur du véhicule à moteur (10) au moment optimal ou pendant l'intervalle de temps optimal au moyen du dispositif capteur d'image (30).

2. Le procédé selon la revendication 1, **caractérisé en ce qu'**au moment optimal ou pendant l'intervalle de temps optimal, un signal de déclenchement d'image est envoyé au dispositif capteur d'image (30), et la génération de la capture d'image du véhicule à moteur (10) ou de la zone de véhicule à moteur du véhicule à moteur (10) est déclenchée au moment optimal ou pendant l'intervalle de temps optimal due à la réception du signal de déclenchement d'image dans le dispositif capteur d'image (30).

3. Le procédé selon la revendication 1, **caractérisé en ce que** le moment optimal ou l'intervalle de temps optimal est communiqué au dispositif capteur d'image (30), dans lequel par conséquent le dispositif capteur d'image (30) génère la capture d'image du véhicule à moteur (10) ou de la zone de véhicule à moteur du véhicule à moteur (10) au moment optimal ou pendant l'intervalle de temps optimal.

4. Le procédé selon la revendication 1, **caractérisé en ce qu'**au moyen du dispositif capteur d'image (30), une série d'une pluralité de captures d'image est générée, et le dispositif de traitement de la courbe temporelle d'intensité du signal récepteur ou un dispositif de traitement d'image sélectionne à partir de la série d'une pluralité de captures d'image au moins une capture d'image générée au moment optimal ou pendant l'intervalle de temps optimal.

5. Le procédé selon la revendication 4, **caractérisé en ce qu'**au moyen d'un dispositif de relèvement de signal (20), le signal d'interférence de la source d'interférence (12) est détecté et au moins un angle de relèvement de la source d'interférence (12) est déterminé, un moment de début de capture de série d'image est déterminé sur la base de l'angle de relèvement déterminé au moyen d'un dispositif de traitement de l'angle de relèvement, le moment de début de capture de série d'image est transmis au dispositif de capture d'image (30) et le dispositif de capture d'image (30) est déclenché en dépendance du moment de début de capture de série d'image pour générer la série d'une pluralité de captures d'image.

6. Le procédé selon l'une des revendications précédentes, **caractérisé en ce que** le dispositif de traitement de la courbe temporelle d'intensité du signal récepteur détermine au moins une valeur maximale de l'intensité du signal récepteur dans la courbe temporelle capturée de l'intensité du signal récepteur et détermine sur la base de la valeur maximale déterminée le moment optimal ou l'intervalle de temps optimal.

7. Le procédé selon la revendication 6, **caractérisé en ce que** le moment optimal ou l'intervalle de temps optimal est déterminé au moyen du dispositif de traitement de la courbe temporelle d'intensité du signal récepteur comme le moment ou l'intervalle de temps auquel ou pendant lequel l'intensité du signal récepteur tombe au-dessous ou dépasse un seuil relatif prédéterminé par rapport à la valeur maximale ou est dans une plage de valeurs prédéterminée relative par rapport à la valeur maximale.

8. Le procédé selon la revendication 6, **caractérisé en ce qu'**au moyen du dispositif de traitement de la courbe temporelle d'intensité du signal récepteur à partir de la courbe temporelle capturée et la valeur maximale déterminée de l'intensité du signal récepteur, un moment maximal et / ou au moins une largeur de la courbe temporelle sont déterminés et le moment optimal ou l'intervalle de temps optimal est déterminé au moyen d'une extrapolation ou d'une interpolation à partir du moment de valeur maximale et / ou la largeur de la courbe temporelle.

9. Le procédé selon la revendication 8, **caractérisé en ce qu'**au moyen du dispositif de traitement de la courbe temporelle d'intensité du signal récepteur, une trajectoire d'une rue sur laquelle le véhicule à moteur se déplace est incluse dans l'extrapolation ou l'interpolation.

10. Le procédé selon l'une des revendications précédentes, **caractérisé en ce que** par plusieurs antennes de réception (71, 71a) du dispositif de détection de signal (70) espacées de manière spatiale, un signal d'interférence respectif de la même source d'interférence (12) est reçu sensiblement simultanément et par le dispositif de détection de signal (70) une pluralité des courbes temporelles d'intensités de signal récepteur assignées aux antennes de réception respectives est capturée, dans lequel parmi plusieurs dispositifs de capture d'image (30, 30a) d'un dispositif de commande (75) ce dispositif capteur d'image (30) qui est associé à l'antenne de réception (71) qui a fourni en comparaison avec toutes les autres antennes de réception (71a), qui reçoivent les signaux d'interférence et les fournissent au dispositif de détection de signal (70), le signal d'interférence ayant l'intensité du signal récepteur la plus élevée au dispositif de détection de signal (70) est choisi pour générer la capture d'image ou à fournir la capture d'image générée par le dispositif de commande (75).

11. Le procédé selon l'une des revendications précédentes, **caractérisé en ce que** la capture d'image générée au moment optimal ou pendant l'intervalle de temps optimal et / ou un identifiant de véhicule à moteur apte à identifier le véhicule à moteur obtenu de la capture d'image est transmis(e) à un ordinateur central avec des informations concernant l'emplacement de la détection du signal d'interférence.

12. Le procédé selon l'une des revendications précédentes, **caractérisé en ce qu'**au moyen du dispositif de traitement de la courbe temporelle d'intensité du signal récepteur, une asymétrie de la courbe temporelle enregistrée de l'intensité du signal récepteur est déterminée et que cette asymétrie est prise en compte par le dispositif de traitement de la courbe temporelle d'intensité du signal récepteur dans la détermination du moment optimal ou de l'intervalle de temps optimal.

13. Un système de détection d'image d'un véhicule à moteur (10) portant une source d'interférence (12) capable de nuire à la fonction prévue d'un récepteur de signal radio, comprenant :
- un dispositif de détection de signal (70) situé au côté d'une rue et conçu pour générer un signal d'interférence de la source d'interférence (12) et pour enregistrer une courbe temporelle de l'intensité d'un signal récepteur du signal d'interférence,
- un dispositif capteur d'image (30) pour générer des captures d'image de véhicules à moteur ou de zones de véhicules à moteur et
- un dispositif de traitement de la courbe temporelle d'intensité du signal récepteur qui est conçu pour déterminer sur la base de la courbe temporelle enregistrée de l'intensité du signal récepteur un moment optimal ou un intervalle de temps optimal dans lequel le véhicule à moteur (10) portant la source d'interférence (12) occupe par rapport au dispositif capteur d'image (30) une position permettant l'identification du véhicule à moteur (10) sur la base d'une capture d'image du dispositif capteur d'image (30) du véhicule à moteur (10) qui est générée au moment optimal ou pendant l'intervalle de temps optimal.

14. Le système selon la revendication 13, **caractérisé en ce que** le dispositif capteur d'image (30) est conçu pour générer sur demande par le du dispositif de traitement de la courbe temporelle d'intensité du signal récepteur une capture d'image du véhicule à moteur (10) au moment optimal ou pendant l'intervalle de temps optimal et / ou pour fournir une capture d'image du véhicule à moteur (10) générée au moment optimal ou pendant l'intervalle de temps optimal pour identifier le véhicule à moteur (10).

15. Le système selon la revendication 13 ou 14, **caractérisé en ce que** le dispositif de détection de signal (70) comporte au moins une antenne directive (71), en particulier une antenne Yagi-Uda, une antenne dipôle périodique logarithmique (antenne LPDA), une antenne parabolique, une antenne à guide d'ondes ou une antenne cornet.

16. Le système selon l'une des revendications 13 à 15, **caractérisé par** :
- un dispositif de relèvement de signal (20) qui est conçu pour détecter le signal d'interférence de la source d'interférence (12) et pour déterminer au moins un angle de relèvement de la source d'interférence (12), et
- un dispositif de traitement d'angle de relèvement qui est conçu pour déterminer un moment de début de capture de série d'images sur la base de l'angle de relèvement déterminé et pour transmettre le moment de début de capture de série d'images déterminé au dispositif capteur d'image (30),
dans lequel
- le dispositif capteur d'image (30) est conçu pour générer en dépendance du moment de début de capture de série d'image une série d'une pluralité de captures d'image, et
- le dispositif de traitement de la courbe temporelle d'intensité du signal récepteur ou un dispositif de traitement d'image est conçu pour sélectionner dans la série de la pluralités de captures d'image au moins une capture d'image générée au moment optimal ou pendant l'intervalle de temps optimal.
